(19)

Europäisches Patentamt

European Patent Office

Office européen des brevets

(11) **EP 4 701 299 A1**

(12) **EUROPEAN PATENT APPLICATION**
published in accordance with Art. 153(4) EPC

(43) Date of publication:
**25.02.2026 Bulletin 2026/09**

(51) International Patent Classification (IPC):
**H04W 72/0446** (2023.01)

(21) Application number: **23937021.6**

(52) Cooperative Patent Classification (CPC):
**H04W 72/0446**

(22) Date of filing: **17.05.2023**

(86) International application number:
**PCT/CN2023/094818**

(87) International publication number:
**WO 2024/234338 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
- **YU, Yang
  Shenzhen, Guangdong 518129 (CN)**
- **LUO, Jiajin
  Shenzhen, Guangdong 518129 (CN)**
- **ZHOU, Baojian
  Shenzhen, Guangdong 518129 (CN)**
- **PENG, Xiaohui
  Shenzhen, Guangdong 518129 (CN)**
- **ZHANG, Ping
  Shenzhen, Guangdong 518129 (CN)**
- **YANG, Xun
  Shenzhen, Guangdong 518129 (CN)**

(74) Representative: **Isarpatent
Patent- und Rechtsanwälte Partg mbB
Friedrichstraße 31
80801 München (DE)**

(54) **METHOD AND APPARATUS FOR SENSING**

(57) This application provides a sensing method and apparatus. The method may include: A sensing transmit end determines phase modulation and control information of a first sensing signal, where the phase modulation and control information is used to control a phase of the first sensing signal to continuously vary over time; and the sensing transmit end sends the first sensing signal to a sensing target. In this solution, a waveform expression of the first sensing signal includes the phase modulation and control information, and the phase modulation and control information can be used to control the phase of the first sensing signal to continuously vary over time. Because phases are strongly related to auto-correlation performance of signals, using signals whose phases continuously varies over time for sensing can enhance auto-correlation performance of the signals, reduce impulse response sidelobes of the signals, and improving sensing performance.

FIG. 7

**Description**

**TECHNICAL FIELD**

This application relates to the field of wireless communication, and specifically, to a sensing method and apparatus.

**BACKGROUND**

Stepped frequency continuous wave (stepped frequency continuous wave, SFCW) is a waveform commonly used in radar sensing. It poses low requirements on hardware and is readily to integrate with communication hardware devices developed based on orthogonal frequency division multiplexing (orthogonal frequency division multiplexing, OFDM) technologies, making it a candidate integrated sensing and communication waveform.
However, SFCW has poor auto-correlation performance and high impulse response sidelobes, resulting in non-ideal sensing performance.

**SUMMARY**

This application provides a sensing method and apparatus, to reduce an impulse response sidelobe of a signal, and improve sensing performance.
According to a first aspect, a sensing method is provided. The method may be performed by a sensing transmit end. The sensing transmit end may be a communication device, or may be a component (for example, a chip or a chip system) used in the communication device. This is not limited in this application.
The method may include: determining phase modulation and control information of a first sensing signal, where the phase modulation and control information is used to control a phase of the first sensing signal to continuously vary over time; and sending the first sensing signal to a sensing target.
Based on the foregoing solution, a waveform expression of the first sensing signal includes the phase modulation and control information, and the phase modulation and control information can be used to control the phase of the first sensing signal to continuously vary over time. Because a phase is strongly related to auto-correlation performance of a signal, when a signal whose phase varies continuously over time is used for sensing, auto-correlation performance of the signal can be improved, an impulse response sidelobe of the signal can be reduced, and sensing performance can be improved.
With reference to the first aspect, in some implementations of the first aspect, determining the phase modulation and control information of the first sensing signal includes: determining the phase modulation and control information based on a time-frequency resource occupied by the first sensing signal.
With reference to the first aspect, in some implementations of the first aspect, a function obtained by taking a first derivative of the phase of the first sensing signal with respect to time is discontinuous over time.
Based on the foregoing solution, because the first derivative of the phase function of the first sensing signal may be discontinuous, hardware requirements on the sensing transmit end can be reduced.
With reference to the first aspect, in some implementations of the first aspect, the first sensing signal and a communication signal occupy a same physical resource block.
Based on the foregoing solution, the first sensing signal in this application not only may be used for sensing, but also may be used for communication, to implement integrated sensing and communication, and the first sensing signal has wider application scenarios. It should be noted that integrated sensing and communication (Integrated Sensing and Communication, ISAC) may also be referred to as integrated communication and sensing, joint communication and sensing (Joint Communication and Sensing, JCAS), or the like. This is not limited in this application.
In addition, the first sensing signal and the communication signal occupy the same physical resource block. In other words, the first sensing signal occupies only a part of subcarrier resources. This helps save resources.
With reference to the first aspect, in some implementations of the first aspect, a waveform expression of the first sensing signal is:

$$s_l(t) = s_{0,l}(t) \cdot e^{j \cdot \varphi(l,t)},$$

and $t \in [0, T]$.
$s_l(t)$ is the waveform expression of the first sensing signal sent at a $t^{th}$ moment in an $l^{th}$ time period, $s_{0,l}(t)$ is a waveform expression of an original signal of the first sensing signal sent at the $t^{th}$ moment in the $l^{th}$ time period, $\varphi(l, t)$ is the phase modulation and control information loaded on the first sensing signal sent at the $t^{th}$ moment in the $l^{th}$ time period, and *T* is a length of each time period.

With reference to the first aspect, in some implementations of the first aspect, an expression of the phase modulation and control information is:

$$\varphi(l, t) = \theta(s_l(t)) - \theta(s_{0,l}(t)),$$

and $t \in [0, T]$.

$\varphi(l, t)$ is the expression of the phase modulation and control information loaded on the first sensing signal sent at the $t^{th}$ moment in the $l^{th}$ time period, $\theta(s_l(t))$ is the phase of the first sensing signal sent at the $t^{th}$ moment in the $l^{th}$ time period, $\theta(s_{0,l}(t))$ is a phase of the original signal of the first sensing signal sent at the $t^{th}$ moment in the $l^{th}$ time period, and $\theta(s_l(t))$ satisfies:

$$\lim_{t \to t_0} \theta(s_l(t)) = \theta(s_l(t_0))),$$

and $\theta(s_{l-1}(T)) = \theta(s_l(0))$.

With reference to the first aspect, in some implementations of the first aspect, a waveform expression of the first sensing signal is:

$$s_{k(l),l}(t) = a_{k,l} \cdot e^{j \cdot \varphi(k(l),l,t)} \cdot e^{j(2\pi \cdot \Delta f \cdot k(l) \cdot (t - N_{CP,l} T_s)},$$

and $t \in [0, (N + N_{CP,l-1})T_s]$.

$s_{k(l),l}(t)$ is the waveform expression of the first sensing signal sent on a $[k(l)]^{th}$ subcarrier at a $t^{th}$ moment in an $l^{th}$ symbol (symbol), $k(l)$ is an index of a subcarrier in the $l^{th}$ symbol, $a_{k(l),l}$ is a loaded modulation signal, $\varphi(k(l), l, t)$ is the phase modulation and control information loaded on the first sensing signal sent on the $[k(l)]^{th}$ subcarrier at the $t^{th}$ moment in the $l^{th}$ symbol, $\Delta f$ is a subcarrier spacing used to send the first sensing signal, $N_{CP,l}$ is a quantity of sampling points of a cyclic prefix corresponding to the $l^{th}$ symbol, and $T_s$ is a sampling time interval.

With reference to the first aspect, in some implementations of the first aspect, the waveform expression of the first sensing signal is:

$$s_l(t) = A \cdot rect\left(\frac{t - lT + T/2}{T}\right) \cdot e^{j(2\pi f_c(l)t + \varphi(l,t))},$$

and $t \in [(l - 1)T, lT]$.

$s_l(t)$ is the waveform expression of the first sensing signal sent at the $t^{th}$ moment in the $l^{th}$ time period, *A* is a signal amplitude, $rect\left(\frac{t - lT + T/2}{T}\right)$ is a rectangular window, *T* is duration of the rectangular window, $f_c(l)$ is a carrier frequency corresponding to the $l^{th}$ time period, and $\varphi(l, t)$ is the phase modulation and control information loaded on the first sensing signal sent at the $t^{th}$ moment in the $l^{th}$ time period.

With reference to the first aspect, in some implementations of the first aspect, an expression of the phase modulation and control information is:

$$\varphi(k(l), l, 0) = \varphi(k(l-1), l-1, T) + 2\pi\Delta f \cdot k(l-1) \cdot (N + N_{CP,l-1})T_s.$$

$\varphi(k(l), l, 0)$ is the phase modulation and control information loaded on the first sensing signal sent on the $[k(l)]^{th}$ subcarrier at a $0^{th}$ moment in the $l^{th}$ symbol, $\varphi(k(l-1), l-1, T)$ is the phase modulation and control information loaded on the first sensing signal sent on a $[k(l-1)]^{th}$ subcarrier at a $T^{th}$ moment in an $(l-1)^{th}$ symbol, $k(l)$ is the index of the subcarrier in the $l^{th}$ symbol, $k(l-1)$ is an index of a subcarrier in the $(l-1)^{th}$ symbol, $\Delta f$ is the subcarrier spacing used to send the first sensing signal, $N_{CP,l-1}$ is a quantity of sampling points of a cyclic prefix corresponding to the $(l-1)^{th}$ symbol, *N* is a quantity of sampling points of an orthogonal frequency division multiplexing OFDM communication signal, and $T_s$ is the sampling time interval.

With reference to the first aspect, in some implementations of the first aspect, an expression of the phase modulation and control information is:

$$\varphi(l, (l - 1)T) = \varphi(l - 1, (l - 1)T) - 2\pi \cdot t \cdot (f_c(l) - f_c(l - 1)).$$

$\varphi(l, (l - 1)T)$ is the phase modulation and control information loaded on the first sensing signal sent at an $[(l - 1)T]^{th}$

moment in the $l^{th}$ time period, $\varphi(l - 1, (l - 1)T)$ is the phase modulation and control information loaded on the first sensing signal sent at the $[(l - 1)T]^{th}$ moment in an $(l - 1)^{th}$ time period, $f_c(l)$ and $f_c(l- 1)$ are respectively carrier frequencies corresponding to the $l^{th}$ time period and the $(l - 1)^{th}$ time period, and $T$ is the length of the time period.

With reference to the first aspect, in some implementations of the first aspect, the method further includes: sending, to a sensing receive end, at least one of the phase modulation and control information and the time-frequency resource occupied by the first sensing signal.

With reference to the first aspect, in some implementations of the first aspect, the method further includes: determining the time-frequency resource occupied by the first sensing signal.

With reference to the first aspect, in some implementations of the first aspect, the determining the time-frequency resource occupied by the first sensing signal includes: determining a minimum spacing between subcarriers for sending the first sensing signal and a bandwidth needed for sending the first sensing signal; and determining the time-frequency resource based on the minimum spacing and the bandwidth.

With reference to the first aspect, in some implementations of the first aspect, the determining the time-frequency resource occupied by the first sensing signal includes: selecting a pattern of the time-frequency resource from a preset time-frequency pattern.

With reference to the first aspect, in some implementations of the first aspect, the method further includes: obtaining an unambiguous range and measurement resolution, where the unambiguous range and the measurement resolution are used to determine the phase modulation and control information.

According to a second aspect, a sensing method is provided. The method may be performed by a sensing receive end. The sensing receive end may be a communication device, or may be a component (for example, a chip or a chip system) used in the communication device. This is not limited in this application.

The method includes: generating a local signal based on phase modulation and control information of a first sensing signal and a time-frequency resource occupied by the first sensing signal, where a phase of the local signal continuously varies over time, the first sensing signal is a signal sent by a sensing transmit end to a sensing target, and the phase modulation and control information is used to control a phase of the first sensing signal to continuously vary over time; receiving a second sensing signal from the sensing target, where the second sensing signal is a signal formed by reflection of the first sensing signal from the sensing target; and performing sensing processing based on the local signal and the second sensing signal.

With reference to the second aspect, in some implementations of the second aspect, the phase modulation and control information of the first sensing signal is determined based on the time-frequency resource occupied by the first sensing signal.

With reference to the second aspect, in some implementations of the second aspect, a function obtained by taking a first derivative of the phase of the local signal with respect to time is discontinuous over time.

With reference to the second aspect, in some implementations of the second aspect, the first sensing signal and a communication signal occupy a same physical resource block.

With reference to the second aspect, in some implementations of the second aspect, a waveform expression of the first sensing signal is:

$$s_l(t) = s_{0,l}(t) \cdot e^{j \cdot \varphi(l,t)},$$

and $t \in [0, T]$.

$s_l(t)$ is the waveform expression of the first sensing signal sent at a $t^{th}$ moment in an $l^{th}$ time period, $s_{0,l}(t)$ is a waveform expression of an original signal of the first sensing signal sent at the $t^{th}$ moment in the $l^{th}$ time period, $\varphi(l, t)$ is the phase modulation and control information loaded on the first sensing signal sent at the $t^{th}$ moment in the $l^{th}$ time period, and $T$ is a length of each time period.

With reference to the second aspect, in some implementations of the second aspect, an expression of the phase modulation and control information is:

$$\varphi(l, t) = \theta(s_l(t)) - \theta(s_{0,l}(t)),$$

and $t \in [0, T]$.

$\varphi(l, t)$ is the expression of the phase modulation and control information loaded on the first sensing signal sent at the $t^{th}$ moment in the $l^{th}$ time period, $\theta(s_l(t))$ is the phase of the first sensing signal sent at the $t^{th}$ moment in the $l^{th}$ time period, $\theta(s_{0,l}(t))$ is a phase of the original signal of the first sensing signal sent at the $t^{th}$ moment in the $l^{th}$ time period, and $\theta(s_l(t))$ satisfies:

$$\lim_{t \to t_0} \theta(s_l(t)) = \theta(s_l(t_0))),$$

and $\theta(s_{l-1}(T)) = \theta(s_l(0))$.

With reference to the second aspect, in some implementations of the second aspect, a waveform expression of the first sensing signal is:

$$s_{k(l),l}(t) = a_{k,l} \cdot e^{j \cdot \varphi(k(l),l,t)} \cdot e^{j(2\pi \cdot \Delta f \cdot k(l) \cdot (t - N_{CP,l} T_s))},$$

and $t \in [0, (N + N_{CP,l-1})T_s]$.

$s_{k(l),l}(t)$ is the waveform expression of the first sensing signal sent on a $[k(l)]^{th}$ subcarrier at a $t^{th}$ moment in an $l^{th}$ symbol (symbol), $k(l)$ is an index of a subcarrier in the $l^{th}$ symbol, $a_{k(l),l}$ is a loaded modulation signal, $\varphi(k(l), l, t)$ is the phase modulation and control information loaded on the first sensing signal sent on the $[k(l)]^{th}$ subcarrier at the $t^{th}$ moment in the $l^{th}$ symbol, $\Delta f$ is a subcarrier spacing used to send the first sensing signal, $N_{CP,l}$ is a quantity of sampling points of a cyclic prefix corresponding to the $l^{th}$ symbol, and $T_s$ is a sampling time interval.

With reference to the second aspect, in some implementations of the second aspect, the waveform expression of the first sensing signal is:

$$s_l(t) = A \cdot \mathrm{rect}\left(\frac{t - lT + T/2}{T}\right) \cdot e^{j(2\pi f_c(l)t + \varphi(l,t))},$$

and $t \in [(l - 1)T, lT]$.

$s_l(t)$ is the waveform expression of the first sensing signal sent at the $t^{th}$ moment in the $l^{th}$ time period, $A$ is a signal amplitude, $\mathrm{rect}\left(\frac{t - lT + T/2}{T}\right)$ is a rectangular window, $T$ is duration of the rectangular window, $f_c(l)$ is a carrier frequency corresponding to the $l^{th}$ time period, and $\varphi(l, t)$ is the phase modulation and control information loaded on the first sensing signal sent at the $t^{th}$ moment in the $l^{th}$ time period.

With reference to the second aspect, in some implementations of the second aspect, an expression of the phase modulation and control information is:

$$\varphi(k(l), l, 0) = \varphi(k(l - 1), l - 1, T) + 2\pi\Delta f \cdot k(l - 1) \cdot (N + N_{CP,l-1})T_s.$$

$\varphi(k(l), l, 0)$ is the phase modulation and control information loaded on the first sensing signal sent on the $[k(l)]^{th}$ subcarrier at a $0^{th}$ moment in the $l^{th}$ symbol, $\varphi(k(l-1), l-1, T)$ is the phase modulation and control information loaded on the first sensing signal sent on a $[k(l-1)]^{th}$ subcarrier at a $T^{th}$ moment in an $(l-1)^{th}$ symbol (symbol), $k(l)$ is the index of the subcarrier in the $l^{th}$ symbol, $k(l-1)$ is an index of a subcarrier in the $(l-1)^{th}$ symbol, $\Delta f$ is the subcarrier spacing used to send the first sensing signal, $N_{CP,l-1}$ is a quantity of sampling points of a cyclic prefix corresponding to the $(l-1)^{th}$ symbol, $N$ is a quantity of sampling points of an orthogonal frequency division multiplexing OFDM communication signal, and $T_s$ is the sampling time interval.

With reference to the second aspect, in some implementations of the second aspect, an expression of the phase modulation and control information is:

$$\varphi(l, (l - 1)T) = \varphi(l - 1, (l - 1)T) - 2\pi \cdot t \cdot (f_c(l) - f_c(l - 1)).$$

$\varphi(l, (l-1)T)$ is the phase modulation and control information loaded on the first sensing signal sent at an $[(l-1)T]^{th}$ moment in the $l^{th}$ time period, $\varphi(l-1, (l-1)T)$ is the phase modulation and control information loaded on the first sensing signal sent at the $[(l-1)T]^{th}$ moment in an $(l-1)^{th}$ time period, $f_c(l)$ and $f_c(l-1)$ are respectively carrier frequencies corresponding to the $l^{th}$ time period and the $(l-1)^{th}$ time period, and $T$ is the length corresponding to the time period.

With reference to the second aspect, in some implementations of the second aspect, the method further includes: receiving at least one of the phase modulation and control information and the time-frequency resource from the sensing transmit end.

According to a third aspect, a sensing apparatus is provided. The apparatus includes: a processing unit, configured to determine phase modulation and control information of a first sensing signal, where the phase modulation and control information is used to control a phase of the first sensing signal to continuously vary over time; and a transceiver unit, configured to send the first sensing signal to a sensing target.

With reference to the third aspect, in some implementations of the third aspect, the processing unit is specifically configured to determine the phase modulation and control information based on a time-frequency resource occupied by the first sensing signal.

With reference to the third aspect, in some implementations of the third aspect, a function obtained by taking a first derivative of the phase of the first sensing signal with respect to time is discontinuous over time.

With reference to the third aspect, in some implementations of the third aspect, the first sensing signal and a communication signal occupy a same physical resource block.

With reference to the third aspect, in some implementations of the third aspect, a waveform expression of the first sensing signal is:

$$s_l(t) = s_{0,l}(t) \cdot e^{j \cdot \varphi(l,t)},$$

and $t \in [0, T]$.

$s_l(t)$ is the waveform expression of the first sensing signal sent at a $t^{th}$ moment in an $l^{th}$ time period, $s_{0,l}(t)$ is a waveform expression of an original signal of the first sensing signal sent at the $t^{th}$ moment in the $l^{th}$ time period, $\varphi(l, t)$ is the phase modulation and control information loaded on the first sensing signal sent at the $t^{th}$ moment in the $l^{th}$ time period, and $T$ is a length of each time period.

With reference to the third aspect, in some implementations of the third aspect, an expression of the phase modulation and control information is:

$$\varphi(l,t) = \theta(s_l(t)) - \theta(s_{0,l}(t)),$$

and $t \in [0, T]$.

$\varphi(l, t)$ is the expression of the phase modulation and control information loaded on the first sensing signal sent at the $t^{th}$ moment in the $l^{th}$ time period, $\theta(s_l(t))$ is the phase of the first sensing signal sent at the $t^{th}$ moment in the $l^{th}$ time period, $\theta(s_{0,l}(t))$ is a phase of the original signal of the first sensing signal sent at the $t^{th}$ moment in the $l^{th}$ time period, and $\theta(s_l(t))$ satisfies:

$$\lim_{t \to t_0} \theta(s_l(t)) = \theta(s_l(t_0))),$$

and $\theta(s_{l-1}(T)) = \theta(s_l(0))$.

With reference to the third aspect, in some implementations of the third aspect, a waveform expression of the first sensing signal is:

$$s_{k(l),l}(t) = a_{k,l} \cdot e^{j \cdot \varphi(k(l),l,t)} \cdot e^{j(2\pi \cdot \Delta f \cdot k(l) \cdot (t - N_{CP,l} \cdot T_s)},$$

and $t \in [0, (N + N_{CP,l-1})T_s]$.

$s_{k(l),l}(t)$ is the waveform expression of the first sensing signal sent on a $[k(l)]^{th}$ subcarrier at a $t^{th}$ moment in an $l^{th}$ symbol (symbol), $k(l)$ is an index of a subcarrier in the $l^{th}$ symbol, $a_{k(l),l}$ is a loaded modulation signal, $\varphi(k(l), l, t)$ is the phase modulation and control information loaded on the first sensing signal sent on the $[k(l)]^{th}$ subcarrier at the $t^{th}$ moment in the $l^{th}$ symbol, $\Delta f$ is a subcarrier spacing used to send the first sensing signal, $N_{CP,l}$ is a quantity of sampling points of a cyclic prefix corresponding to the $l^{th}$ symbol, and $T_s$ is a sampling time interval.

With reference to the third aspect, in some implementations of the third aspect, the waveform expression of the first sensing signal is:

$$s_l(t) = A \cdot \text{rect}\left(\frac{t - lT + T/2}{T}\right) \cdot e^{j(2\pi f_c(l)t + \varphi(l,t))},$$

and $t \in [(l - 1)T, lT]$.

$s_l(t)$ is the waveform expression of the first sensing signal sent at the $t^{th}$ moment in the $l^{th}$ time period, $A$ is a signal amplitude, $\text{rect}\left(\frac{t - lT + T/2}{T}\right)$ is a rectangular window, $T$ is duration of the rectangular window, $f_c(l)$ is a carrier frequency corresponding to the $l^{th}$ time period, and $\varphi(l, t)$ is the phase modulation and control information loaded on the first sensing signal sent at the $t^{th}$ moment in the $l^{th}$ time period.

With reference to the third aspect, in some implementations of the third aspect, an expression of the phase modulation and control information is:

$$\varphi(k(l),l,0) = \varphi(k(l-1),l-1,T) + 2\pi\Delta f \cdot k(l-1) \cdot \left(N + N_{CP,l-1}\right)T_s.$$

$\varphi(k(l), l, 0)$ is the phase modulation and control information loaded on the first sensing signal sent on the $[k(l)]^{th}$

subcarrier at a $0^{th}$ moment in the $l^{th}$ symbol, $\varphi(k(l-1), l-1, T)$ is the phase modulation and control information loaded on the first sensing signal sent on a $[k(l-1)]^{th}$ subcarrier at a $T^{th}$ moment in an $(l-1)^{th}$ symbol (symbol), $k(l)$ is the index of the subcarrier in the $l^{th}$ symbol, $k(l-1)$ is an index of a subcarrier in the $(l-1)^{th}$ symbol, $\Delta f$ is the subcarrier spacing used to send the first sensing signal, $N_{CP,l-1}$ is a quantity of sampling points of a cyclic prefix corresponding to the $(l-1)^{th}$ symbol, $N$ is a quantity of sampling points of an orthogonal frequency division multiplexing OFDM communication signal, and $T_s$ is the sampling time interval.

With reference to the third aspect, in some implementations of the third aspect, an expression of the phase modulation and control information is:

$$\varphi(l, (l-1)T) = \varphi(l-1, (l-1)T) - 2\pi \cdot t \cdot \big(f_c(l) - f_c(l-1)\big).$$

$\varphi(l, (l-1)T)$ is the phase modulation and control information loaded on the first sensing signal sent at an $[(l-1)T]^{th}$ moment in the $l^{th}$ time period, $\varphi(l-1, (l-1)T)$ is the phase modulation and control information loaded on the first sensing signal sent at the $[(l-1)T]^{th}$ moment in an $(l-1)^{th}$ time period, $f_c(l)$ and $f_c(l-1)$ are respectively carrier frequencies corresponding to the $l^{th}$ time period and the $(l-1)^{th}$ time period, and $T$ is the length corresponding to the time period.

With reference to the third aspect, in some implementations of the third aspect, the transceiver unit is further configured to send, to a sensing receive end, at least one of the phase modulation and control information and the time-frequency resource occupied by the first sensing signal.

With reference to the third aspect, in some implementations of the third aspect, the processing unit is further configured to determine the time-frequency resource occupied by the first sensing signal.

With reference to the third aspect, in some implementations of the third aspect, the processing unit is specifically configured to: determine a minimum spacing between subcarriers for sending the first sensing signal and a bandwidth needed for sending the first sensing signal; and determine the time-frequency resource based on the minimum spacing and the bandwidth.

With reference to the third aspect, in some implementations of the third aspect, the processing unit is specifically configured to select a pattern of the time-frequency resource from a preset time-frequency pattern.

With reference to the third aspect, in some implementations of the third aspect, the transceiver unit is further configured to obtain an unambiguous range and measurement resolution, where the unambiguous range and the measurement resolution are used to determine the phase modulation and control information.

According to a fourth aspect, a sensing apparatus is provided. The apparatus includes: a processing unit, configured to generate a local signal based on phase modulation and control information of a first sensing signal and a time-frequency resource occupied by the first sensing signal, where a phase of the local signal continuously varies over time, the first sensing signal is a signal sent by a sensing transmit end to a sensing target, and the phase modulation and control information is used to control a phase of the first sensing signal to continuously vary over time; and a transceiver unit, configured to receive a second sensing signal from the sensing target, where the second sensing signal is a signal formed by reflection of the first sensing signal from the sensing target. The processing unit is further configured to perform sensing processing based on the local signal and the second sensing signal.

With reference to the fourth aspect, in some implementations of the fourth aspect, the phase modulation and control information is determined based on the time-frequency resource.

With reference to the fourth aspect, in some implementations of the fourth aspect, a function obtained by taking a first derivative of the phase of the local signal with respect to time is discontinuous over time.

With reference to the fourth aspect, in some implementations of the fourth aspect, the first sensing signal and a communication signal occupy a same physical resource block.

With reference to the fourth aspect, in some implementations of the fourth aspect, a waveform expression of the first sensing signal is:

$$s_l(t) = s_{0,l}(t) \cdot e^{j \cdot \varphi(l,t)},$$

and $t \in [0, T]$.

$s_l(t)$ is the waveform expression of the first sensing signal sent at a $t^{th}$ moment in an $l^{th}$ time period, $s_{0,l}(t)$ is a waveform expression of an original signal of the first sensing signal sent at the $t^{th}$ moment in the $l^{th}$ time period, $\varphi(l, t)$ is the phase modulation and control information loaded on the first sensing signal sent at the $t^{th}$ moment in the $l^{th}$ time period, and $T$ is a length of each time period.

With reference to the fourth aspect, in some implementations of the fourth aspect, an expression of the phase modulation and control information is:

$$\varphi(l, t) = \theta(s_l(t)) - \theta(s_{0,l}(t)),$$

and $t \in [0, T]$.

$\varphi(l, t)$ is the expression of the phase modulation and control information loaded on the first sensing signal sent at the $t^{th}$ moment in the $l^{th}$ time period, $\theta(s_l(t))$ is the phase of the first sensing signal sent at the $t^{th}$ moment in the $l^{th}$ time period, $\theta(s_{0,l}(t))$ is a phase of the original signal of the first sensing signal sent at the $t^{th}$ moment in the $l^{th}$ time period, and $\theta(s_l(t))$ satisfies:

$$\lim_{t \to t_0} \theta(s_l(t)) = \theta(s_l(t_0))),$$

and $\theta(s_{l-1}(T)) = \theta(s_l(0))$.

With reference to the fourth aspect, in some implementations of the fourth aspect, a waveform expression of the first sensing signal is:

$$s_{k(l),l}(t) = a_{k,l} \cdot e^{j \cdot \varphi(k(l),l,t)} \cdot e^{j(2\pi \cdot \Delta f \cdot k(l) \cdot (t - N_{CP,l} T_s)},$$

and $t \in [0, (N + N_{CP,l-1})T_s]$.

$s_{k(l),l}(t)$ is the waveform expression of the first sensing signal sent on a $[k(l)]^{th}$ subcarrier at a $t^{th}$ moment in an $l^{th}$ symbol (symbol), $k(l)$ is an index of a subcarrier in the $l^{th}$ symbol, $a_{k(l),l}$ is a loaded modulation signal, $\varphi(k(l), l, t)$ is the phase modulation and control information loaded on the first sensing signal sent on the $[k(l)]^{th}$ subcarrier at the $t^{th}$ moment in the $l^{th}$ symbol, $\Delta f$ is a subcarrier spacing used to send the first sensing signal, $N_{CP,l}$ is a quantity of sampling points of a cyclic prefix corresponding to the $l^{th}$ symbol, and $T_s$ is a sampling time interval.

With reference to the fourth aspect, in some implementations of the fourth aspect, the waveform expression of the first sensing signal is:

$$s_l(t) = A \cdot \text{rect}\left(\frac{t - lT + T/2}{T}\right) \cdot e^{j(2\pi f_c(l)t + \varphi(l,t))},$$

and $t \in [(l - 1)T, lT]$.

$s_l(t)$ is the waveform expression of the first sensing signal sent at the $t^{th}$ moment in the $l^{th}$ time period, $A$ is a signal amplitude, $\text{rect}\left(\frac{t - lT + T/2}{T}\right)$ is a rectangular window, $T$ is duration of the rectangular window, $f_c(l)$ is a carrier frequency corresponding to the $l^{th}$ time period, and $\varphi(l, t)$ is the phase modulation and control information loaded on the first sensing signal sent at the $t^{th}$ moment in the $l^{th}$ time period.

With reference to the fourth aspect, in some implementations of the fourth aspect, an expression of the phase modulation and control information is:

$$\varphi(k(l), l, 0) = \varphi(k(l-1), l-1, T) + 2\pi\Delta f \cdot k(l-1) \cdot \left(N + N_{CP,l-1}\right)T_s.$$

$\varphi(k(l), l, 0)$ is the phase modulation and control information loaded on the first sensing signal sent on the $[k(l)]^{th}$ subcarrier at a $0^{th}$ moment in the $l^{th}$ symbol, $\varphi(k(l-1), l-1, T)$ is the phase modulation and control information loaded on the first sensing signal sent on a $[k(l-1)]^{th}$ subcarrier at a $T^{th}$ moment in an $(l-1)^{th}$ symbol (symbol), $k(l)$ is the index of the subcarrier in the $l^{th}$ symbol, $k(l-1)$ is an index of a subcarrier in the $(l-1)^{th}$ symbol, $\Delta f$ is the subcarrier spacing used to send the first sensing signal, $N_{CP,l-1}$ is a quantity of sampling points of a cyclic prefix corresponding to the $(l-1)^{th}$ symbol, $N$ is a quantity of sampling points of an orthogonal frequency division multiplexing OFDM communication signal, and $T_s$ is the sampling time interval.

With reference to the fourth aspect, in some implementations of the fourth aspect, an expression of the phase modulation and control information is:

$$\varphi(l, (l-1)T) = \varphi(l-1, (l-1)T) - 2\pi \cdot t \cdot \left(f_c(l) - f_c(l-1)\right).$$

$\varphi(l, (l-1)T)$ is the phase modulation and control information loaded on the first sensing signal sent at an $[(l-1)T]^{th}$ moment in the $l^{th}$ time period, $\varphi(l-1, (l-1)T)$ is the phase modulation and control information loaded on the first sensing signal sent at the $[(l-1)T]^{th}$ moment in an $(l-1)^{th}$ time period, $f_c(l)$ and $f_c(l-1)$ are respectively carrier frequencies corresponding to the $l^{th}$ time period and the $(l-1)^{th}$ time period, and $T$ is the length corresponding to the time period.

With reference to the fourth aspect, in some implementations of the fourth aspect, the transceiver unit is further configured to receive at least one of the phase modulation and control information and the time-frequency resource from the sensing transmit end.

It should be understood that, for beneficial effects of the second aspect to the fourth aspect, refer to related descriptions of the first aspect. Details are not described herein again.

According to a fifth aspect, a sensing apparatus is provided. The apparatus is configured to perform the method according to either of the first aspect and the second aspect. Specifically, the apparatus may include a unit and/or a module configured to perform the method according to any one of the foregoing implementations of either of the first aspect and the second aspect, for example, a processing unit and/or a communication unit.

For the third aspect, the fourth aspect, or the fifth aspect, in an implementation, the apparatus is a communication device. When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is the chip, the chip system, or the circuit used in the communication device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a sixth aspect, a sensing apparatus is provided. The apparatus includes: a memory, configured to store a program; and at least one processor, configured to execute a computer program or instructions stored in the memory, to perform the method according to any one of the implementations of either of the first aspect and the second aspect.

In an implementation, the apparatus is a communication device.

In another implementation, the apparatus is a chip, a chip system, or a circuit used in a communication device.

According to a seventh aspect, this application provides a processor, configured to perform the method according to any one of the implementations of either of the first aspect and the second aspect.

Operations such as sending and obtaining/receiving related to the processor may be understood as operations such as output and input of the processor, or sending and receiving operations performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code to be executed by a device, and the program code is used to perform the method according to any one of the implementations of either of the first aspect and the second aspect.

According to a ninth aspect, a computer program product including instructions is provided. When the computer program product runs on a computer, the computer is caused to perform the method according to any one of the implementations of either of the first aspect and the second aspect.

According to a tenth aspect, a chip is provided. The chip includes a processor and a communication interface. The processor reads, through the communication interface, instructions stored in a memory, to perform the method according to any one of the implementations of either of the first aspect and the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the implementations of either of the first aspect and the second aspect.

According to an eleventh aspect, a sensing system is provided. The system includes the apparatus according to any one of the third aspect or the implementations of the third aspect, and the apparatus according to any one of the fourth aspect or the implementations of the fourth aspect.

## BRIEF DESCRIPTION OF DRAWINGS

FIG. 1 is a diagram of wireless communication systems 100 applicable to an embodiment of this application;

FIG. 2 is a one-dimensional sectional view of two scatterers at critical resolution;

FIG. 3 is a diagram of an impulse response function;

FIG. 4 is a time-frequency diagram of a frequency modulated continuous wave;

FIG. 5 is a time-frequency diagram of a stepped frequency continuous wave;

FIG. 6 is a time-frequency diagram of using an OFDM multi-carrier waveform as a waveform of a positioning reference signal;

FIG. 7 is a schematic flowchart of a sensing method 200 according to an embodiment of this application;

FIG. 8 is a time-phase diagram of a first sensing signal according to this application;

FIG. 9 is a diagram of subcarrier patterns according to an embodiment of this application;

FIG. 10 is a diagram of a sensing method 300 according to an embodiment of this application;

FIG. 11 is a diagram of several different application scenarios according to an embodiment of this application;

FIG. 12 is a block diagram of a sensing apparatus 1000 according to an embodiment of this application;

FIG. 13 is a block diagram of a sensing apparatus 1100 according to an embodiment of this application; and

FIG. 14 is a block diagram of a chip system 1200 according to an embodiment of this application.

## DESCRIPTION OF EMBODIMENTS

Technical solutions of this application are described below with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th Generation, 6G) mobile communication system. The technical solutions provided in this application may be further applied to device-to-device (device-to-device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system. This is not limited in this application.

In embodiments of this application, a network device may be any device having a wireless transceiver function, or may be referred to as a radio access network (radio access network, RAN) device. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. The device may alternatively be a gNB or a transmission point (TRP or TP) in a 5G system, for example, an NR system, or one antenna panel or a group of (including a plurality of antenna panels) antenna panels of a base station in the 5G system, or may be a module or unit that constitutes the gNB or the transmission point, for example, a baseband unit (BBU), a distributed unit (distributed unit, DU), a central unit (central unit, CU), a central unit control plane (CU control plane, CU-CP) node, or a central unit user plane (CU user plane, CU-UP) node, or may be a radio unit (radio unit, RU), a base station in a next-generation communication 6G system, or the like.

The network device in embodiments of this application may alternatively be an open-radio access network (open-radio access network, O-RAN) device (open RAN, or ORAN). To be specific, the network device includes a plurality of RAN nodes, the plurality of RAN nodes cooperate to assist a terminal device in implementing radio access, and different RAN nodes respectively implement a part of functions of the network device. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in a remote radio unit (remote radio unit, RRU), an active antenna unit (active antenna unit, AAU), or a remote radio head (remote radio head, RRH). For example, in some deployments, the network device may include a central unit CU and a DU. The CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. In addition, the CU may be classified as a RAN node in a RAN device, or the CU may be classified as a core network (core network, CN) node. This is not limited in this application.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU (open DU), the CU-CP may also be referred to as an O-CU-CP (open CU-CP), the CU-UP may also be referred to as an O-CU-UP (open CU-UP), and the RU may also be referred to as an O-RU (open RU). For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The network device provides a service for a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an internet of things (internet of things, IoT) system. IoT is an important part of future information technology development. A main technical feature of the IoT is to connect an object to a network by using a communication technology, to implement an intelligent network for human-machine interconnection and thing-thing interconnection. An IoT technology may implement massive connections, deep coverage, and terminal power saving by using, for example, a narrow band (narrow band) NB technology.

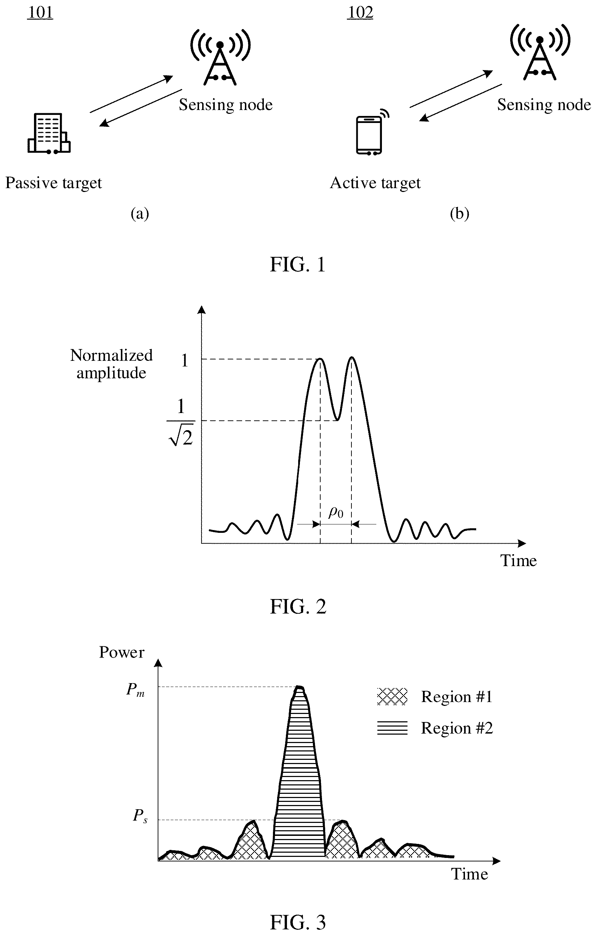

In an example, FIG. 1 is a diagram of wireless communication systems applicable to an embodiment of this application. As shown in (a) in FIG. 1, the wireless communication system 101 may include a passive target (which is a target, for example, a person, a car, or a building, that does not establish a communication connection to a sensing node) and a sensing node. The sensing node may be the foregoing terminal device or network device, for example, the AP, the BS, the UE, or the STA.

As shown in (b) in FIG. 1, the wireless communication system 102 may include an active target (which is a target that establishes a communication connection to a sensing node) and a sensing node. The active target may be the foregoing terminal device or network device, for example, any one of the AP, the BS, the UE, or the STA. The sensing node may also be the foregoing terminal device or network device, for example, the AP, the BS, the UE, or the STA.

It should be understood that a sensing target in this application may be an active target, or may be a passive target. The sensing node in this application includes a sensing transmit end and a sensing receive end. Optionally, the sensing node may further include a sensing initiator. The sensing transmit end and the sensing receive end may be a same device, or may be different devices. The sensing initiator and the sensing transmit end may be a same device, or may be different devices. The sensing initiator and the sensing receive end may be a same device, or may be different devices.

For ease of understanding of embodiments of this application, concepts in embodiments of this application are briefly described below.

1. Evaluation indicator of radar sensing performance

Main performance of radar sensing includes three aspects: spatial performance, radiometric performance, and technical performance. The spatial performance mainly includes a size and a location of an imaging region, location precision of an imaging target point, and spatial resolution. The radiometric performance reflects a capability of a radar image to represent and distinguish between scattering rates of ground objects, and mainly includes a dynamic range, an impulse response sidelobe, and radiometric resolution. The technical performance mainly reflects a device technology and status, for example, synchronization precision, an operating frequency, and a signal bandwidth.

In the foregoing performance parameters, the spatial resolution and the impulse response sidelobe may be used as indicators used to evaluate image sensing performance. The spatial resolution reflects a minimum distance between scatterers that can be distinguished in the radar image, and is an important indicator for image quality evaluation.

FIG. 2 is a one-dimensional sectional view of two scatterers at critical resolution, and reflects a change of a normalized amplitude of spatial resolution over time. A most commonly used method for describing spatial resolution of an imaging system is a Rayleigh (Rayleigh) criterion. When it is considered that critical resolution can be performed on two scatterers according to the Rayleigh criterion, a distance $\rho_0$ between the two scatterers (as shown in FIG. 2) is Rayleigh resolution. During actual application, the Rayleigh resolution is usually determined by using a corresponding main lobe width obtained when power of an image-domain response of the scatterer is half of peak power (half power) of a main lobe. It should be understood that the corresponding main lobe width obtained when the power is half of the peak power of the main lobe is a corresponding main lobe width obtained when power of the main lobe is reduced to half, that is, a corresponding main lobe width obtained when the power of the main lobe is 3 dB.

The impulse response sidelobe is a sidelobe of the image-domain response of the scatterer. An impulse response function may be considered as an image-domain response of a single scatterer, and indicators for measuring a feature of the impulse response sidelobe are an integrated sidelobe ratio (integrated sidelobe ratio, ISLR) and a peak sidelobe ratio (peak sidelobe ratio, PSLR).

FIG. 3 is a diagram of the impulse response function. As shown in FIG. 3, the ISLR is defined as a ratio of sidelobe energy (an area of a region #1 shown in FIG. 3) to main lobe energy (an area of a region #2 shown in FIG. 3) of the impulse response function. The ISLR may be used to describe image grayscale distortion caused by a system eliminating a nearby distributed target, and may be used to quantitatively describe a degree to which a local dark region is submerged by energy leakage from a surrounding bright region. A smaller ISLR indicates higher image quality. A specific expression of the ISLR may be written as:

$$\text{ISLR} = 10\lg \frac{E_t - E_m}{E_m} \qquad (1)$$

$E_m$ represents the main lobe energy of the impulse response function, that is, the area of the region #2 in FIG. 3, and $E_t$ represents total energy of the impulse response function, that is, a total area of the region #1 and the region #2 in FIG. 3.

The PSLR is defined as a ratio of peak power of a highest sidelobe to peak power of the main lobe of the impulse response function, and represents a capability of the system to observe a weak scatterer near a strong scatterer. A smaller PSLR indicates a stronger capability. A specific expression of the PSLR is:

$$\text{PSLR} = 10\lg \frac{P_s}{P_m} \qquad (2)$$

$P_m$ represents the peak power of the main lobe of the impulse response function, and $P_s$ represents the peak power of the highest sidelobe of the impulse response function.

2. Sensing waveform

(1) Frequency modulated continuous wave (frequency modulated continuous wave, FMCW)

In waveforms used by an imaging radar, the frequency modulated continuous wave FMCW is the most commonly used waveform. Formula (3) provides a mathematical expression of the waveform:

$$s(k, t) = A e^{j2\pi(f_0 t + 0.5kt^2) + \varphi_0} \qquad (3)$$

$s(k, t)$ represents the FMCW waveform expression at a moment t when a slope for frequency modulation is $k$, $A$ represents an amplitude, $f_0$ represents an initial frequency, and $\varphi_0$ represents an initial phase.

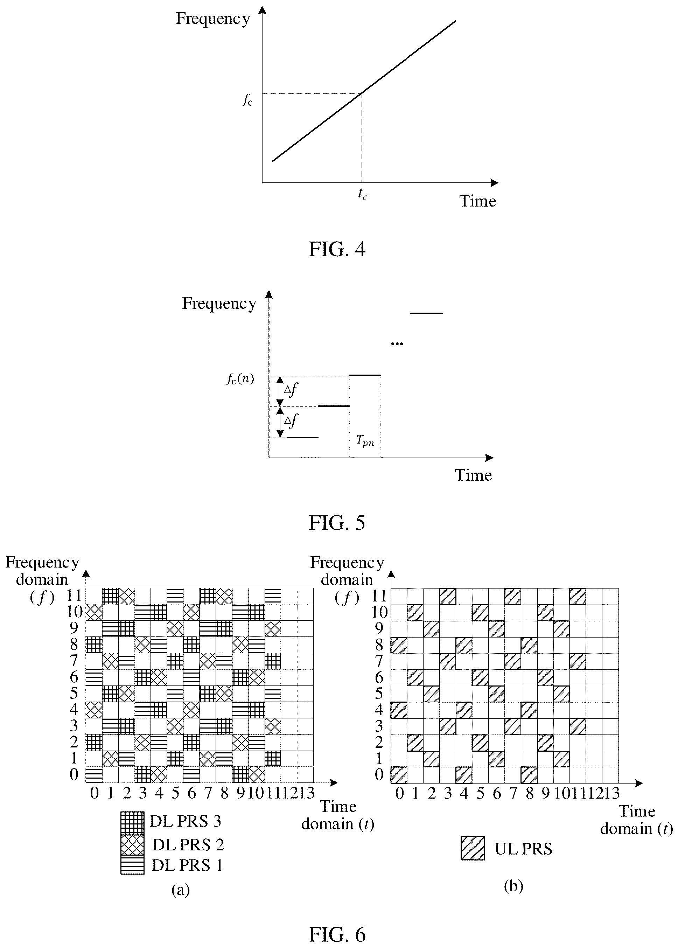

FIG. 4 is a time-frequency diagram of the FMCW. It can be learned from FIG. 4 that a frequency of the FMCW varies continuously over time. At a moment $t_c$, the frequency is $f_c$. The FMCW has good auto-correlation, and can achieve a large bandwidth and a low impulse response sidelobe. However, in some systems, especially in a large-bandwidth system whose bandwidth reaches 100 MHz, the waveform has some defects.

First, the waveform has high requirements on hardware. Hardware of a transmitter needs to be able to generate linear frequency modulation scanning, and all analog devices need to be able to support all bandwidths (Bandwidth) needed by the system without distortion. Second, in a phased array real-aperture system, if the FMCW is transmitted, an effective wavelength of the transmitter changes in a scanning process. Especially in a broadband system, a wavelength of the transmitter changes greatly. This causes a change in an antenna angle of view.

Third, the FMCW is not a good communication waveform. The FMCW has poor compatibility with communication systems developed based on orthogonal frequency division multiplexing (orthogonal frequency division multiplexing, OFDM) multi-carrier, making it difficult to be an integrated sensing and communication waveform for large-scale application.

(2) Stepped frequency continuous wave (stepped frequency continuous wave, SFCW)

SFCW is another waveform commonly used in radar sensing. It can also implement a large bandwidth. The most common stepped frequency waveform uses linear frequency stepping, to be specific, each impulse lasts for $T_p$, and a radio frequency $f_c(n)$ in an impulse increases by fixed $\Delta f$ compared with a previous impulse $f_c(n - 1)$. Formula (4) is a mathematical expression of the waveform:

$$s_n(t) = A \mathrm{rect}\left(\frac{t - nT_p + T_p/2}{T_p}\right) e^{j2\pi f_c(n)t} \qquad (4)$$

$s_n(t)$ represents the expression of the waveform at a moment $t$ in an $n^{th}$ signal period, A represents a signal amplitude, $\mathrm{rect}\left(\frac{t - nT_p + T_p/2}{T_p}\right)$ represents a rectangular window, $T_p$ is duration of the rectangular window, $f_c(n)$ is a carrier frequency corresponding to the $n^{th}$ signal period, and $f_c(n) - f_c(n - 1) = \Delta f$. In this application, the signal period may also be referred to as a time period.

FIG. 5 is a time-frequency diagram of the SFCW. As shown in FIG. 5, the SFCW may use linear frequency stepping. Because only a simple radio frequency signal with a constant frequency is used in each impulse, tolerance of a transmitter and a receiver is good, and only an instantaneous bandwidth of $1/T_p$ needs to be satisfied during transmission and reception. In addition, for a real-aperture phased array antenna, when an effective wavelength thereof varies between impulses, the effective wavelength may be set within a time interval, so that a steering direction of the real-aperture phased array antenna can be maintained approximately constant. It should be understood that, in FIG. 5, $T_{pn}$ represents impulse duration of the $n^{th}$ signal period, $T_{pn} = T_p$, and $\Delta f$ is a fixed increment of a radio frequency.

However, one of disadvantages of the SFCW is that a transmitter and a receiver with tunable impulses are required, and a plurality of impulses rather than one impulse are needed to collect data within a needed bandwidth. In addition, frequency stepping also leads to a high impulse response sidelobe and poor performance of the SFCW.

(3) OFDM multi-carrier

The OFDM multi-carrier is a good communication waveform and can also be used for sensing measurement, such as ranging and positioning, making it a candidate integrated sensing and communication waveform. Formula (5) is an expression of the waveform:

$$s(t) = \sum_{i=0}^{N-1} d_i \, rect\left(\frac{t - t_s}{T}\right) e^{j2\pi f_c(i)t} \qquad (5)$$

s(t) represents the OFDM waveform expression at a moment t, N represents a total quantity of subcarrier frequencies, $d_i$ represents data transmitted on an $i^{th}$ subcarrier, $rect\left(\frac{t - t_s}{T}\right)$ represents a rectangular window, $T$ is duration of the rectangular window, $t_s$ represents a start moment of data transmission, and $f_c(i)$ represents a carrier frequency of the $i^{th}$ subcarrier.

FIG. 6 is a time-frequency diagram of using an OFDM multi-carrier waveform as a waveform of 5G NR positioning reference signals (positioning reference signal, PRS). (a) in FIG. 6 is a time-frequency diagram illustrating downlink (downlink, DL) PRSs 1 transmitted by transmission and reception point (transmission and reception point, TRP) 1, DL PRSs 2 transmitted by TRP 2, and DL PRSs 3 transmitted by TRP 3. A frequency domain spacing ($N_{comb}$) of the PRS 1, the PRS 2, and the PRS 3 is 6. (b) in FIG. 6 is a time-frequency diagram illustrating uplink (uplink, UL) PRSs. A frequency domain spacing of the uplink PRS is 4. It can be learned from FIG. 6 that subcarrier frequencies of the OFDM multi-carrier waveform are evenly distributed. Similar to the SFCW, a single radio frequency is used within a same subcarrier.

However, the OFDM multi-carrier waveform exhibits poor an auto-correlation and high impulse response sidelobes, and an auto-correlation result of the OFDM multi-carrier waveform shows some randomness due to presence of a modulated communication signal. In addition, OFDM has different modulation modes like 4QAM and 64QAM, and different modulation modes significantly affect the auto-correlation result of the OFDM multi-carrier waveform. This leads to instability in its sensing performance.

In conclusion, in existing commonly used sensing waveforms, the FMCW has poor communication performance and high requirements on hardware, and is difficult to be combined with a communication hardware device developed based on an OFDM technology. The performance of the OFDM multi-carrier waveform is unstable and the impulse response sidelobe is high. Although the SFCW waveform has low requirements on hardware and is easy to be combined with the communication hardware device developed based on the OFDM technology, the SFCW waveform has the high impulse response sidelobe and has poorer sensing performance than the FMCW waveform.

In view of this, this application provides a sensing method and apparatus, to reduce an impulse response sidelobe of a signal, and improve sensing performance.

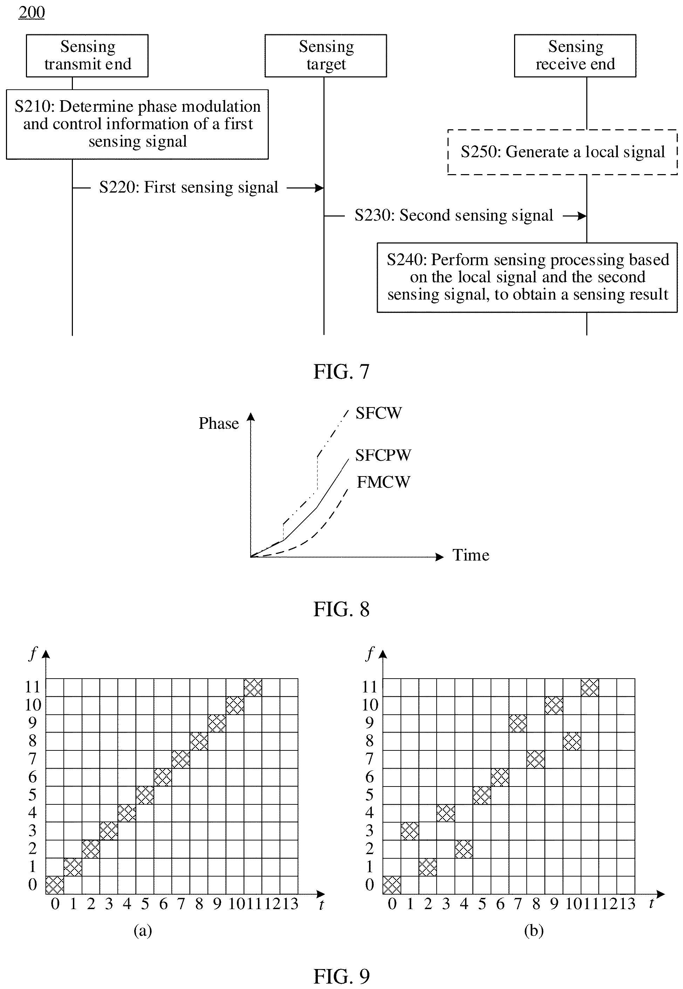

FIG. 7 is a schematic flowchart of a sensing method 200 according to an embodiment of this application. The method shown in FIG. 7 is described by using signaling interaction between a sensing transmit end and a sensing receive end as an example. As shown in FIG. 7, the method 200 includes the following steps.

S210: The sensing transmit end determines phase modulation and control information of a first sensing signal.

The phase modulation and control information is used to control a phase of the first sensing signal to continuously vary over time.

It should be understood that a change rule of a signal may be represented by using a waveform, the waveform may be described by using a data expression, and a mathematical expression may include one or more parameters. In this application, "phase modulation and control information of a signal" may be understood as a parameter in a waveform expression of the signal. "A phase of a signal" is an inherent attribute of a waveform of the signal. That the phase modulation and control information of the first sensing signal is used to control the phase of the first sensing signal to continuously vary over time may be understood as that a parameter in a waveform expression of the first sensing signal can be used to control the phase of the signal to continuously vary over time.

S220: The sensing transmit end sends the first sensing signal to a sensing target.

That the first sensing signal is sent to the sensing target may be understood as that the first sensing signal directly reaches the sensing target, or the first sensing signal reaches the sensing target after one or more spatial actions. The spatial action may be one or more of refraction, scattering, reflection, diffraction, or the like.

S230: The sensing receive end receives a second sensing signal from the sensing target.

A signal that is formed by reflection of the first sensing signal through the sensing target and that reaches the sensing receive end is denoted as the second sensing signal.

Optionally, if the sensing receive end and the sensing transmit end are a same device, the second sensing signal is a signal formed by transmission of the first sensing signal through the device.

S240: The sensing receive end performs sensing processing based on a local signal and the second sensing signal, to obtain a sensing result.

Specifically, the sensing receive end may perform sensing processing on the received second sensing signal by using the local signal generated by the sensing receive end, to obtain the sensing result, for example, obtain a location of the sensing target and a distance between the sensing target and the sensing receive end.

The local signal is a signal generated by the sensing receive end, and the local signal and the first sensing signal have basically similar features. For example, a phase of the local signal also varies continuously over time. For another example, a function obtained by taking a first derivative of a phase of the local signal with respect to time varies discontinuously over time.

Optionally, the local signal and the first sensing signal have a same expression.

Based on the foregoing solution, the waveform expression of the first sensing signal includes the phase modulation and control information, and the phase modulation and control information can be used to control the phase of the first sensing signal to continuously vary over time. Because a phase is strongly related to auto-correlation performance of a signal, when a signal whose phase varies continuously over time is used for sensing, auto-correlation performance of the signal can be improved, an impulse response sidelobe of the signal can be reduced, and sensing performance can be improved.

For example, if the sensing transmit end is an O-RAN device, step S210 and step S220 may be implemented by a DU or an RU.

For example, if the sensing receive end is an O-RAN device, step S230 and step S240 may be implemented by a DU or an RU.

Optionally, a function obtained by taking a first derivative of the phase of the first sensing signal with respect to time is discontinuous over time.

A variation rule of the phase over time may be represented by a phase function, and that "the phase varies continuously over time" may be expressed as that the phase function is a continuous function. "The function obtained by taking the first derivative of the phase with respect to time" is a first derivative function of the phase function, and that "the function obtained by taking the first derivative of the phase with respect to time varies discontinuously over time" is that the first derivative function of the phase function is a non-continuous function.

FIG. 8 is a time-phase diagram of the first sensing signal according to this application. For comparison, FIG. 8 further provides change rules of phases of an FMCW and an SFCW over time. A waveform of the first sensing signal provided in this application may be referred to as a stepped frequency continuous phase wave (stepped frequency continuous phase wave, SFCPW). It can be learned from FIG. 8 that a phase discontinuity occurs in the SFCW during radio frequency hopping. In other words, the phase of the SFCW jumps over time, and a phase of the SFCPW varies continuously over time. Because phase information is strongly correlated with waveform auto-correlation performance, the SFCPW has better auto-correlation performance than the SFCW, and has a low impulse response sidelobe. In addition, although the phase of the FMCW is also continuous over time, because the phase of the FMCW follows a quadratic function feature over time, in other words, a phase function is smooth and continuous, and a phase function of the SFCPW is non-smooth and continuous, in other words, a first derivative of the phase function of the SFCPW may be non-continuous, the SFCPW has lower requirements on hardware.

Optionally, a radio frequency of the first sensing signal may be in a stepped form.

The radio frequency of the first sensing signal is non-uniformly stepped. In other words, the radio frequency of the first sensing signal does not need to be the same as that of the SFCW, to be specific, a radio frequency in an impulse increases by fixed $\Delta f$ compared with a previous impulse (as shown in FIG. 5). For example, stepping of the radio frequency of the first sensing signal may be non-uniform hopping, decreasing hopping, alternate hopping, or the like, and a core feature thereof is that the phase modulation and control information is helpful to keep phase continuity before and after signal frequency hopping.

It should be understood that a sensing function such as ranging or imaging is implemented for a radio frequency signal by using a relative phase relationship between carriers. Phase relationships between carriers in different waveforms are different. In this case, auto-correlation results of the waveforms are different, and finally, sensing performance of the waveforms is different. The auto-correlation performance may be reflected by using an impulse response.

Optionally, the first sensing signal and a communication signal occupy a same physical resource block.

In other words, the first sensing signal may be used as the communication signal.

It should be understood that the radio frequency signal is a signal sent by a wireless device, and may be classified into a communication signal, a sensing signal, and the like based on different application scenarios. The communication signal is a radio frequency signal used for communication, and the sensing signal is a radio frequency signal used for sensing.

Optionally, waveforms of the communication signal and the sensing signal may be the same. In other words, a signal used for communication and a signal used for sensing are a same signal, or a signal may be used as a sensing signal and a communication signal, for example, the first sensing signal in this application.

Optionally, waveforms of the communication signal and the sensing signal may be different. In other words, a signal used for communication and a signal used for sensing are different signals, or the communication signal can be used only for communication and cannot be used for sensing, and the sensing signal can be used only for sensing and cannot be used for communication.

It should be understood that, that a signal "cannot be used for sensing" described in this application means that when the signal is used as a sensing signal, sensing performance of the signal is not ideal, for example, cannot satisfy a basic sensing requirement. Similarly, that a signal "cannot be used for communication" means that when the signal is used as a communication signal, communication performance of the signal is not ideal, for example, cannot satisfy a basic communication requirement.

Based on the foregoing solution, the first sensing signal in this application not only may be used for sensing, but also may be used for communication, to implement integrated sensing and communication, and the first sensing signal has a wider application scenario.

In addition, the first sensing signal and the communication signal occupy the same physical resource block. In other words, the first sensing signal occupies only a part of subcarrier resources. This helps save resources.

The communication signal may be a signal modulated by using an OFDM technology. In other words, the first sensing signal may also be a signal modulated by using the OFDM technology.

Optionally, the waveform expression of the first sensing signal is:

$$s_l(t) = s_{0,l}(t) \cdot e^{j \cdot \varphi(l,t)}, \text{ and } t \in [0, T] \tag{6}$$

In Formula (6), $s_l(t)$ is the waveform expression of the first sensing signal sent at a $t$th moment in an $l$th time period, $s_{0,l}(t)$ is a waveform expression of an original signal of the first sensing signal sent at the $t$th moment in the $l$th time period, $\varphi(l, t)$ is the phase modulation and control information loaded on the first sensing signal sent at the $t$th moment in the Ith time period, and $T$ is a length of each time period.

In this application, the original signal of the first sensing signal is an original signal on which phase modulation and control is performed to obtain the first sensing signal.

Formula (6) may be understood as a general expression of the waveform of the first sensing signal, and $\varphi(l, t)$ may

be used to control the phase of $s_l(t)$ to continuously vary over time.

$\varphi(l, t)$ may be written in the following form:

$$\varphi(l,t) = \theta(s_l(t)) - \theta(s_{0,l}(t)), \text{ and } t \in [0, T] \tag{7}$$

In Formula (7), $\theta(s_l(t))$ is the phase of the first sensing signal sent at the $t$th moment in the $l$th time period, $\theta(s_{0,l}(t))$ is a phase of the original signal of the first sensing signal sent at the $t$th moment in the $l$th time period, and $\theta(s_l(t))$ satisfies:

$$\lim_{t \to t_0} \theta(s_l(t)) = \theta(s_l(t_0))), \text{ and } \theta(s_{l-1}(T)) = \theta(s_l(0)) \tag{8}$$

Formula (8) indicates that $\theta(s_l(t))$ is continuous in a period of $t \in [0, T]$, and is continuous across any two adjacent periods. In other words, the phase $\theta(s_l(t))$ of the first sensing signal varies continuously over time.

In an example, a waveform of the original signal of the first sensing signal is an OFDM multi-carrier waveform, or the first sensing signal is obtained through modulation by using the OFDM technology.

In this example, Formula (6) may be further written in the following form:

$$s_{k(l),l}(t) = a_{k,l} \cdot e^{j \cdot \varphi(k(l),l,t)} \cdot e^{j(2\pi \cdot \Delta f \cdot k(l) \cdot (t - N_{CP,l} \cdot T_s))}, \text{ and } t \in [0, (N + N_{CP,l-1})T_s] \tag{9}$$

In Formula (9), $s_{k(l),l}(t)$ is a waveform expression of the first sensing signal sent on a $[k(l)]$th subcarrier at a $t$th moment in an $l$th symbol (symbol), $k(l)$ is an index of a subcarrier in the $l$th symbol, $a_{k(l),l}$ is a loaded modulation signal, $\varphi(k(l), l, t)$ is the phase modulation and control information loaded on the first sensing signal sent on the $[k(l)]$th subcarrier at the $t$th moment in the $l$th symbol, $\Delta f$ is a subcarrier spacing used to send the first sensing signal, $N_{CP,l}$ is a quantity of sampling points of a cyclic prefix corresponding to the $l$th symbol, and $T_s$ is a sampling time interval. $\varphi(k(l), l, t)$ may be used to control the phase of $s_{k(l),l}(t)$ to continuously vary over time.

In this example, $\varphi(k(l), l, t)$ satisfies the following condition:

$$\varphi(k(l),l,0) = \varphi(k(l-1),l-1,T) + 2\pi\Delta f \cdot k(l-1) \cdot (N + N_{CP,l-1})T_s \tag{10}$$

In Formula (10), $\varphi(k(l), l, 0)$ is the phase modulation and control information loaded on the first sensing signal sent on the $[k(l)]$th subcarrier at a $0$th moment in the $l$th symbol, $\varphi(k(l-1), l-1, T)$ is the phase modulation and control information loaded on the first sensing signal sent on a $[k(l-1)]$th subcarrier at a $T$th moment in an $(l-1)$th symbol (symbol), $k(l)$ is the index of the subcarrier in the $l$th symbol, $k(l-1)$ is an index of a subcarrier in the $(l-1)$th symbol, $\Delta f$ is the subcarrier spacing used to send the first sensing signal, $N_{CP,l-1}$ is a quantity of sampling points of a cyclic prefix corresponding to the $(l-1)$th symbol, $N$ is a quantity of sampling points of an orthogonal frequency division multiplexing OFDM communication signal, and $T_s$ is the sampling time interval.

In an example, a waveform of the original signal of the first sensing signal is an SFCW, or the SFCW may be used as the waveform of the first sensing signal after phase modulation is performed on the SFCW.

In this example, Formula (6) may be further written in the following form:

$$s_l(t) = A \cdot \text{rect}\left(\frac{t - lT + T/2}{T}\right) \cdot e^{j(2\pi f_c(l)t + \varphi(l,t))}, \text{ and } t \in [(l-1)T, lT] \tag{11}$$

In Formula (11), $s_l(t)$ is the waveform expression of the first sensing signal sent at the $t$th moment in the $l$th time period, A is a signal amplitude, $\text{rect}\left(\frac{t - lT + T/2}{T}\right)$ is a rectangular window, $T$ is duration of the rectangular window, $f_c(l)$ is a carrier frequency corresponding to the $l$th time period, and $\varphi(l, t)$ is the phase modulation and control information loaded on the first sensing signal sent at the $t$th moment in the $l$th time period. $\varphi(l, t)$ may be used to control the phase of $s_l(t)$ to continuously vary over time.

In this example, $\varphi(l, t)$ satisfies the following condition:

$$\varphi(l,(l-1)T) = \varphi(l-1,(l-1)T) - 2\pi \cdot t \cdot (f_c(l) - f_c(l-1)) \tag{12}$$

In Formula (12), $\varphi(l, (l-1)T)$ is the phase modulation and control information loaded on the first sensing signal sent at an $[(l-1)T]$th moment in the $l$th time period, $\varphi(l-1, (l-1)T)$ is the phase modulation and control information loaded on the first sensing signal sent at the $[(l-1)T]$th moment in an $(l-1)$th time period, $f_c(l)$ and $f_c(l-1)$ are respectively carrier frequencies corresponding to the $l^{th}$ time period and the $(l - 1)^{th}$ time period, and T is the length corresponding to the time period.

Optionally, the method 200 further includes the following step. S250: The sensing receive end generates the local signal.

For example, the sensing receive end may generate the local signal based on the phase modulation and control information of the first sensing signal and a time-frequency resource occupied by the first sensing signal.

For example, a process of a method for generating the local signal is as follows: The sensing receive end generates, based on the phase modulation and control information of the first sensing signal and the time-frequency resource occupied by the first sensing signal, the local signal whose expression is the same as that of the first sensing signal.

In a possible case, if the sensing transmit end and the sensing receive end are a same device, the first sensing signal and the local signal are a same signal. In this case, the first sensing signal and the local signal are generated at a same moment.

For example, if the sensing receive end is an O-RAN device, step S250 may be implemented by a DU or an RU.

Optionally, that the sensing transmit end determines the phase modulation and control information of the first sensing signal in S210 includes: The sensing transmit end determines the phase modulation and control information based on the time-frequency resource occupied by the first sensing signal.

In this application, the time-frequency resource may include a resource in time domain (that is, a time domain resource) and a resource in frequency domain (that is, a frequency domain resource). The time-frequency resource may include one or more time domain units (which may also be referred to as time units, units of time, or the like), and the frequency domain resource may include one or more frequency domain units.

One time domain unit may be one symbol or several symbols (for example, orthogonal frequency division multiplexing (orthogonal frequency division multiplexing, OFDM) symbols), one slot (slot), one mini-slot (mini-slot), or one subframe (subframe). One slot may include seven symbols or 14 symbols. One mini-slot may include at least one symbol (for example, two symbols, seven symbols, 14 symbols, or any quantity of symbols less than or equal to 14 symbols). In addition, duration of a slot may be related to a subcarrier spacing (subcarrier spacing, SCS). For example, when the subcarrier spacing is 15 kHz, duration of one slot is 1 millisecond (ms); when the subcarrier spacing is 30 kHz, duration of one slot is 0.5 ms; or when the subcarrier spacing is 60 kHz, duration of one slot is 0.25 ms. Similarly, it may be deduced that when the subcarrier spacing is $15*2^u$, duration of one slot is $2^{-u}$ ms. u=0, 1, 2, .... It should be understood that sizes of the foregoing listed time domain units are only used for ease of understanding of the solutions in this application, and do not constitute a limitation on the protection scope of this application. It may be understood that the sizes of the foregoing time domain units may be other values. This is not limited in this application.

A frequency domain unit may be a physical resource block (physical resource block, PRB), a resource block set (resource block set), a subcarrier (subcarrier), a resource block group (resource block group, RBG), a predefined subband (subband), a precoding resource block group (precoding resource block group, PRG), a bandwidth part (bandwidth part, BWP), a resource element (resource element, RE) (which may also be referred to as a resource unit or a resource granularity), a channel with a given bandwidth, a carrier, or a serving cell.

The time-frequency resource occupied by the first sensing signal may also be referred to as a subcarrier pattern occupied by the first sensing signal, may be referred to as a time-frequency resource block occupied by the first sensing signal, or may be referred to as resource element distribution of the first sensing signal. A resource element is a minimum granularity of a resource.

Specifically, a relationship between the time-frequency resource occupied by the first sensing signal and the phase modulation and control information of the first sensing signal is as follows: The determined phase modulation and control information may enable a phase between any two adjacent frequency domain resources (for example, RE) in the time-frequency resource to be continuous.

It should be understood that, in this application, a pattern of a subcarrier includes a time domain resource and a frequency domain resource, the pattern is a distribution result of REs on a time-frequency resource block, and each RE occupies both a frequency domain resource and a time domain resource.

Optionally, the method 200 further includes: The sensing transmit end determines the time-frequency resource occupied by the first sensing signal.

In an implementation, the sensing transmit end first determines a minimum spacing between subcarriers for sending the first sensing signal and a bandwidth needed for sending the first sensing signal, and may further determine the time-frequency resource based on the minimum spacing between the subcarriers and the needed bandwidth.

A minimum value $N_{f-min}$ of a quantity of subcarriers included in the time-frequency resource may be determined based on the minimum spacing $\Delta f_{min}$ between the subcarriers and the needed bandwidth $B$, that is, $N_{f-min} = \frac{B}{\Delta f_{min}}$ .

Therefore, when the time-frequency resource is selected, the quantity $N_f$ of subcarriers included in the time-frequency resource needs to satisfy: $N_f \geq N_{f-min}$.

Optionally, the time-frequency resource may be selected or determined in the following two manners:

Manner 1: The time-frequency resource is selected or determined from a currently idle time-frequency resource.

Because the time-frequency resource occupied by the first sensing signal is selected from the currently idle time-frequency resource, further, the time-frequency resource may be selected from the currently idle time-frequency resource in real time, to enable optimal utilization of the time-frequency resource.

Manner 2: The time-frequency resource is selected or determined from a preset time-frequency pattern.

For example, a plurality of time-frequency resource patterns (pattern) are predefined first, where the patterns may correspond to different indexes (index), and then search is performed on the predefined patterns in a table lookup and search manner.

The time-frequency resource occupied by the first sensing signal is selected from the preset time-frequency pattern. In this manner, time consumption is less, and calculation overheads can be effectively reduced.

Optionally, in this application, a pattern of the time-frequency resource of the first sensing signal may be in a uniform stepping manner, in other words, a frequency difference between adjacent subcarriers in the time-frequency resource is a fixed value. Alternatively, a pattern of the time-frequency resource of the first sensing signal may be in a non-uniform stepping manner, in other words, a frequency difference between adjacent subcarriers in the time-frequency resource is not a fixed value.

In another implementation, the sensing transmit end first determines a minimum spacing between subcarriers for sending the first sensing signal and duration needed for sending the first sensing signal, and may further determine the time-frequency resource based on the minimum spacing between the subcarriers and the needed duration.

It should be understood that the minimum spacing and the bandwidth may be used for ranging in sensing, and the minimum spacing and the duration may be used for speed measurement in sensing. This application is mainly described by using ranging as an example. A speed measurement method is similar to this, and details are not described herein again.

Optionally, that the sensing transmit end sends the first sensing signal in S220 means that the sensing transmit end sends the first sensing information based on the "time-frequency resource occupied by the first sensing signal" and the "phase modulation and control information of the first sensing signal" that are determined by the sensing transmit end.

The "time-frequency resource occupied by the first sensing signal" and the "phase modulation and control information of the first sensing signal" may be understood as waveform information of the first sensing signal or a configuration parameter of the waveform of the first sensing signal.

Optionally, the method 200 further includes: The sensing transmit end obtains an unambiguous range and measurement resolution, where the unambiguous range and the measurement resolution are used to determine the phase modulation and control information.

For example, the sensing transmit end may determine, based on the unambiguous range and the measurement resolution, the minimum spacing between the subcarriers for sending the first sensing signal and the bandwidth needed for sending the first sensing signal, to determine, based on the minimum spacing between the subcarriers and the needed bandwidth, the time-frequency resource occupied by the first sensing signal, and further determine the phase modulation and control information based on the time-frequency resource.

The unambiguous range and the measurement resolution that are obtained by the sensing transmit end are basic parameters of a sensing system, and the basic parameters may be configured by a sensing initiator.

Optionally, the sensing initiator may also be referred to as a control node, may send the basic parameter of the sensing system to the sensing transmit end, and may further send a trigger signal to the sensing receive end. The trigger signal may be used by the sensing receive end to enable a sensing function.

The sensing system may include the sensing transmit end and the sensing receive end. Optionally, the sensing system may further include the sensing initiator.

Optionally, the unambiguous range is a maximum unambiguous distance of the sensing system. For example, the sensing transmit end and the sensing receive end are different devices, and the sensing transmit end and the sensing receive end are used as focal points of an ellipse. A sensing range, that is, an ellipse, may be determined based on the unambiguous range D and the two focal points, and a sum of distances from any point on the ellipse to the two focal points is equal to 2D. For another example, the sensing transmit end and the sensing receive end are a same device, and the sensing transmit end (or the sensing receive end) is used as a center of a circle. A sensing range, that is, a circle, may be determined based on the unambiguous range D and the center of the circle, and a distance from any point on the circle to the center of the circle is 2D. The measurement resolution is a capability of the sensing system to distinguish between two targets with different distances. If the measurement resolution is $\delta$, when a difference between distances from two targets to the sensing system is greater than or equal to $\delta$, the sensing system may distinguish between the two different targets.

It should be understood that, in this application, the unambiguous range may be an unambiguous ranging range, or may be an unambiguous speed measurement range. If the unambiguous ranging range is used, the "unambiguous range" may also be referred to as a maximum unambiguous distance. The "unambiguous range" means that when a measured value (for example, a speed or a distance) exceeds the range, ambiguity is generated, to be specific, a device maps the measured value that exceeds the range to a value within the unambiguous range, resulting in a case in which a real value of the measured value cannot be determined.

Similarly, the measurement resolution may be ranging resolution, or may be speed measurement resolution.

Optionally, in this application, either the sensing transmit end or the sensing receive end may be used as a sensing initiator. In other words, the sensing initiator and the sensing transmit end may be a same device, or the sensing initiator and the sensing receive end may be a same device. It should be understood that, when two roles in a communication system are a same device, signaling interaction between the two roles is an internal action of the device, and there is no need to perform air interface signaling interaction.

Optionally, in this application, the sensing initiator, the sensing transmit end, and the sensing receive end are different devices.

The following uses an example to describe how the sensing transmit end determines the phase modulation and control information based on the unambiguous range and the measurement resolution.

It is assumed that the unambiguous distance $D$ = 150 m, and the measurement resolution $\delta$ = 108 m. Because the minimum spacing $\Delta f_{min}$ between the subcarriers of the first sensing signal needs to satisfy:

$$\Delta f_{min} \leq \frac{c}{2D} = \frac{3*10^8}{2*150} = 1000 \text{ kHz} .$$ , and there are five optional subcarrier spacings in an NR system: 15 kHz, 30 kHz, 60 kHz, 120 kHz, and 240 kHz, the minimum spacing $\Delta f_{min}$ = 240 kHz between the subcarriers may be selected, and a corresponding maximum unambiguous distance is $D_1 = \frac{c}{2\Delta f_{min}} = 625 \, m > D$. The bandwidth $B$ needed by the first sensing signal is determined based on the measurement resolution $\delta$ = 108 m, that is, $B \geq \frac{c}{\delta} = \frac{3*10^8}{108} \approx 2.778 \text{ MHz}$ .

Further, the minimum value $N_{f\text{-}min}$ of the quantity of subcarriers is determined based on the selected bandwidth $B$ and the

selected subcarrier spacing $\Delta f_{min}$, that is, $N_{f-min} = \frac{B}{\Delta f_{min}} = \frac{2.778*10^6}{240*10^3} \approx 11.57$. Therefore, when the time-frequency resource is selected, the quantity $N_f$ of subcarriers included in the time-frequency resource needs to be at least 12. The following provides descriptions with reference to FIG. 9.

FIG. 9 is a diagram of subcarrier patterns according to an embodiment of this application. A vertical coordinate represents a frequency domain ($f$), and a horizontal coordinate represents a time domain ($t$). As shown in (a) and (b) in FIG. 9, the time-frequency resource occupied by the first sensing signal includes 12 subcarriers in frequency domain and 12 symbols in time domain. In (a) in FIG. 9, the subcarriers are in a uniform stepping manner, and a frequency difference between adjacent subcarriers in the time-frequency resource is one subcarrier spacing. In (b) in FIG. 9, the subcarriers are in a non-uniform stepping manner, and a frequency difference between adjacent subcarriers in the time-frequency resource is three subcarrier spacings, two subcarrier spacings, or one subcarrier spacing.

It should be understood that $N_f$ may alternatively be any value greater than 12. In addition, the time-frequency resource may alternatively include two or more subcarriers with a same frequency. This is not limited in this application.

Further, if the determined time-frequency resource is shown in (a) in FIG. 9 or shown in (b) in FIG. 9, the phase modulation and control information may be shown in Formula (10), where Δ=240 kHz in the formula.

Optionally, if the pattern of the time-frequency resource of the first sensing signal is in a uniform stepping manner, for example, as shown in (a) in FIG. 9, that is, $\Delta f \cdot k(l) - \Delta f \cdot k(l - 1) = \Delta f$, $\varphi(k(l), l, t)$ in Formula (9) may be written as:

$$\varphi(k(l), l, t) = (l \cdot 2\pi\Delta f \cdot k(0) + l \cdot (l - 1) \cdot \pi\Delta f^2) \cdot (N + N_{CP,l-1})T_s \qquad (13)$$

It should be understood that, in Formula (13), $\varphi(k(l), l, t)$ does not change with $t$, to be specific, if a value of $t$ is changed, $\varphi$ remains unchanged. In other words, $\varphi(k(l), l, t) = \varphi(k(l), l)$, or $\varphi(k(l), l)$ is a special case of $\varphi(k(l), l, t)$.

Optionally, the method 200 further includes: The sensing transmit end sends, to the sensing receive end, at least one of the phase modulation and control information and the time-frequency resource occupied by the first sensing signal.

For example, if the sensing transmit end sends, to the sensing receive end, the time-frequency resource occupied by the first sensing signal, based on different manners of selecting the time-frequency resource, information corresponding to the time-frequency resource is sent in the following two manners:

Manner 1: When the sensing transmit end selects, from the currently idle time-frequency resource, the time-frequency resource occupied by the first sensing signal, the sensing transmit end may send detailed information about the selected time-frequency resource to the sensing receive end.

Manner 2: When the sensing transmit end selects, from the preset time-frequency pattern, the time-frequency resource occupied by the first sensing signal, the sensing transmit end may send, to the sensing receive end, an index (index) corresponding to the pattern of the selected time-frequency resource. The index may be referred to as a sensing pattern index (sensing pattern index, SPI). In this way, feedback overheads can be reduced.

The sensing transmit end may further send the determined phase modulation and control information of the first sensing signal to the sensing receive end.

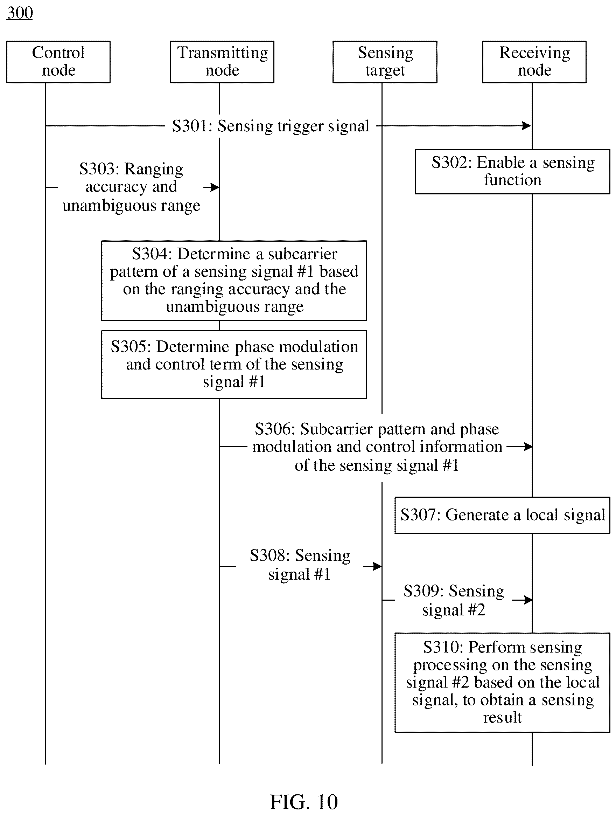

FIG. 10 is a diagram of a sensing method 300 according to an embodiment of this application. The method 300 may be considered as a specific implementation of the method 200. As shown in FIG. 10, the method 300 includes the following steps.

S301: A control node (an example of a sensing initiator) sends a sensing trigger signal to a receiving node (an example of a sensing receive end).

For example, in this application, the trigger signal may be sent by using any one of RRC signaling, downlink control information (downlink control information, DCI), uplink control information (uplink control information, UCI), an X2 interface, an Xn interface, or the like. This is not limited in this application.

S302: The receiving node enables a sensing function based on the sensing trigger signal.

S303: The control node sends measurement resolution $\delta$ and an unambiguous range D to a transmitting node (an example of a sensing initiator). Optionally, the measurement resolution may be system-defined or required.

For example, the measurement resolution $\delta$ and the unambiguous range D may be sent by using any one of the RRC signaling, the DCI, the UCI, the X2 interface, the Xn interface, or the like. This is not limited in this application.

S304: The transmitting node determines a subcarrier pattern (pattern) (an example of a time-frequency resource occupied by a first sensing signal) of a sensing signal #1 (an example of the first sensing signal) based on the unambiguous distance D and the measurement resolution $\delta$.

S305: The transmitting node determines a phase modulation and control term of the sensing signal #1 (an example of phase modulation and control information of the first sensing signal) based on the selected subcarrier pattern, where the phase modulation and control term may cause a phase between any two adjacent subcarriers to be continuous.

For detailed descriptions of S305, refer to S210.

S306: The transmitting node sends waveform information such as the selected subcarrier pattern and the phase modulation and control term to the receiving node.

For example, the waveform information may be sent by using any one of the RRC signaling, the DCI, the UCI, the X2 interface, the Xn interface, or the like. This is not limited in this application.

S307: The receiving node generates a local signal based on the waveform information such as the selected subcarrier pattern and the phase modulation and control term.

For detailed descriptions of S307, refer to S250.

S308: The transmitting node transmits the sensing signal #1 to a sensing target based on the waveform information such as the subcarrier pattern and the phase modulation and control information.

For detailed descriptions of S308, refer to S220.

S309: A signal that is formed by reflection of the sensing signal #1 through the sensing target and that reaches the receiving node is a sensing signal #2 (an example of a second sensing signal).

For detailed descriptions of S309, refer to S230.

S310: The receiving node performs sensing processing on the sensing signal #2 based on the local signal, to obtain a sensing result.

For detailed descriptions of S310, refer to S240.

For example, if the control node is an O-RAN device, step S301 and step S303 may be implemented by a CU-CP, a CU-UP, or a DU.

For example, if the transmitting node is an O-RAN device, step S304, step S305, and step S308 may be implemented by a DU or an RU, and step S306 may be implemented by a CU-CP, a CU-UP, or a DU.

For example, if the receiving node is an O-RAN device, step S302 may be implemented by a CU-CP or a CU-UP, and step S307, step S309, and step S310 may be implemented by a DU or an RU.

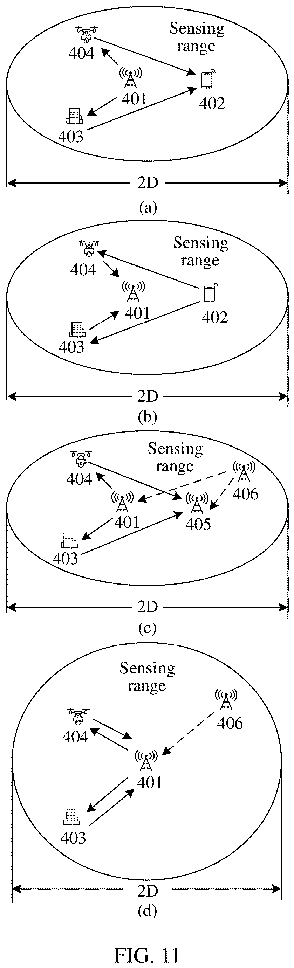

FIG. 11 is a diagram of several different application scenarios according to an embodiment of this application.

As shown in (a) in FIG. 11, in an application scenario of the method 200, a sensing transmit end is a network device 401, a sensing receive end is a terminal device 402, and sensing targets are a building 403 and an uncrewed aerial vehicle 404. The terminal device 402 senses the building 403 and the uncrewed aerial vehicle 404 by using a sensing signal sent by the network device 401. In addition, in this scenario, the network device 401 is also used as a sensing initiator. In other words, the sensing initiator and the sensing transmit end are the same device.

In this scenario, a trigger signal sent by the network device 401 to the terminal device 402 may be sent by using RRC signaling or downlink control information (downlink control information, DCI), phase modulation and control information and a time-frequency resource that are sent by the network device 401 to the terminal device 402 may be sent by using the RRC signaling or the DCI, and the network device 401 may independently determine an unambiguous range and measurement resolution. A sensing range is an ellipse, and a major axis of the ellipse is 2D.

As shown in (b) in FIG. 11, in another application scenario of the method 200, a sensing transmit end is a terminal device 402, a sensing receive end is a network device 401, and sensing targets are a building 403 and an uncrewed aerial vehicle 404. The network device 401 senses the building 403 and the uncrewed aerial vehicle 404 by using a sensing signal sent by the terminal device 402. In addition, in this scenario, the network device 401 is also used as a sensing initiator. In other words, the sensing initiator and the sensing receive end are the same device.

In this scenario, phase modulation and control information and a time-frequency resource that are sent by the terminal device 402 to the network device 401 may be sent by using uplink control information (uplink control information, UCI), an unambiguous range and measurement resolution that are sent by the network device 401 to the terminal device 402 may be sent by using RRC signaling or DCI, and the network device 401 may independently determine to enable a sensing function. A sensing range is an ellipse, and a major axis of the ellipse is 2D.

As shown in (c) in FIG. 11, in another application scenario of the method 200, a sensing transmit end is a network device 401, a sensing receive end is a network device 405, a sensing initiator is a network device 406, and sensing targets are a building 403 and an uncrewed aerial vehicle 404. The terminal device 405 senses the building 403 and the uncrewed aerial vehicle 404 by using a sensing signal sent by the network device 401. In this scenario, the sensing initiator, the sensing transmit end, and the sensing receive end are different devices.

In this scenario, a trigger signal sent by the network device 406 to the network device 405 may be sent by using an X2 interface or an Xn interface, phase modulation and control information and a time-frequency resource that are sent by the network device 401 to the network device 405 may be sent by using the X2 interface or the Xn interface, and an unambiguous range and measurement resolution that are sent by the network device 406 to the network device 401 may be sent by using the X2 interface or the Xn interface. A sensing range is an ellipse, and a major axis of the ellipse is 2D.

As shown in (d) in FIG. 11, in another application scenario of the method 200, a sensing transmit end is a network device 401, a sensing receive end is the network device 401, a sensing initiator is a network device 406, and sensing targets are a building 403 and an uncrewed aerial vehicle 404. The network device 401 senses the building 403 and the uncrewed aerial vehicle 404 by using a sensing signal sent by the network device 401. In this scenario, the sensing transmit end and the sensing receive end are the same device.

In this scenario, a trigger signal sent by the network device 406 to the network device 401 may be sent by using an X2 interface or an Xn interface, an unambiguous range and measurement resolution that are sent by the network device 406 to the network device 401 may be sent by using the X2 interface or the Xn interface, and the network device 401 may independently determine phase modulation and control information and a time-frequency resource. A sensing range is a circle, and a radius of the circle is D.

It should be understood that FIG. 11 shows several examples of the application scenarios of this application, and is not intended to limit the application scenarios of this application. In addition, in any application scenario, a manner of sending information such as the trigger signal, the unambiguous range, the measurement resolution, the phase modulation and control information, and the time-frequency resource is merely an example of the application scenario, is not bound to the application scenario, and is not used as a limitation on a signaling interaction manner in this application.

In correspondence to the methods provided in the foregoing method embodiments, embodiments of this application further provide corresponding apparatuses. The apparatus includes corresponding modules configured to perform the foregoing method embodiments. The module may be software, hardware, or a combination of the software and the hardware. It may be understood that the technical features described in the method embodiments are also applicable to the following apparatus embodiments.

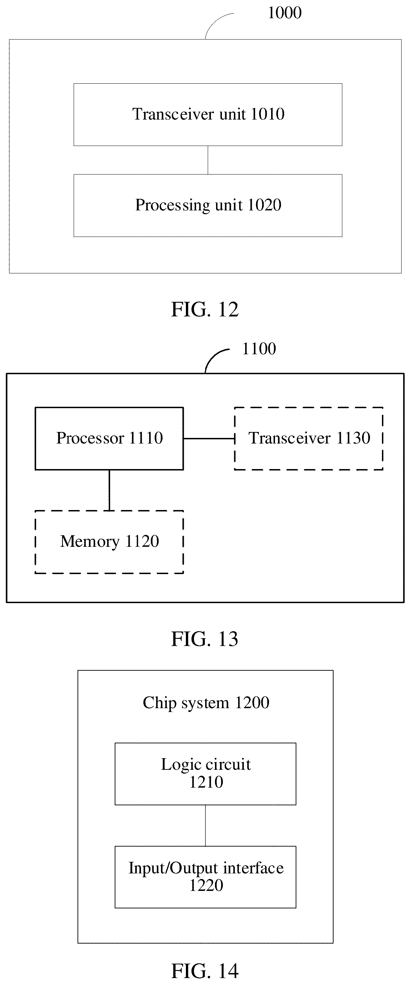

In an example, FIG. 12 is a block diagram of a sensing apparatus 1000 according to an embodiment of this application. The apparatus 1000 includes a transceiver unit 1010 and a processing unit 1020. The transceiver unit 1010 may be configured to implement a corresponding communication function. The transceiver unit 1010 may also be referred to as a communication interface or a communication unit. The processing unit 1020 may be configured to implement a corresponding processing function.

In a design, the apparatus 1000 is configured to perform the steps or the procedures performed by the sensing transmit end in the embodiment shown in FIG. 7 or FIG. 10.

For example, the processing unit 1020 is configured to determine phase modulation and control information of a first sensing signal, where the phase modulation and control information is used to control a phase of the first sensing signal to continuously vary over time. The transceiver unit 1010 is configured to send the first sensing signal to a sensing target.

It should be understood that the foregoing content is merely used as an example for understanding. The apparatus 1000 can further implement other steps, actions, or methods related to the sensing transmit end in the method 200 or the method 300. Details are not described herein again.

In addition, a specific process in which the units perform the foregoing corresponding steps is described in detail in the foregoing method embodiments. For brevity, details are not described herein again.

In another design, the apparatus 1000 is configured to perform the steps or the procedures performed by the sensing receive end in the embodiment shown in FIG. 7 or FIG. 10.

For example, the processing unit 1020 is configured to generate a local signal based on the phase modulation and control information of the first sensing signal and a time-frequency resource occupied by the first sensing signal, where a phase of the local signal continuously varies over time, the first sensing signal is a signal sent by the sensing transmit end to the sensing target, and the phase modulation and control information is used to control the phase of the first sensing signal to continuously vary over time. The transceiver unit 1010 is configured to receive a second sensing signal from the sensing target, where the second sensing signal is a signal formed by reflection of the first sensing signal from the sensing target. The processing unit 1020 is further configured to perform sensing processing based on the local signal and the second sensing signal.

It should be understood that the foregoing content is merely used as an example for understanding. The apparatus 1000 can further implement other steps, actions, or methods related to the sensing receive end in the method 200 or the method 300. Details are not described herein again.

In addition, a specific process in which the units perform the foregoing corresponding steps is described in detail in the foregoing method embodiments. For brevity, details are not described herein again.

It should be further understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

For example, a product implementation form of the apparatus 1000 provided in this embodiment of this application is program code that is executable on a computer.

For example, the apparatus 1000 provided in this embodiment of this application may be a communication device, or may be a chip, a chip system (for example, a system on chip (system on chip, SoC)), or a circuit used in the communication device. When the apparatus 1000 is the communication device, the transceiver unit 1010 may be a transceiver or an input/output interface, and the processing unit 1020 may be a processor. When the apparatus 1000 is the chip, the chip system, or the circuit used in the communication device, the transceiver unit 1010 may be an input/output interface, an interface circuit, an output circuit, an input circuit, a pin, a related circuit, or the like on the chip, the chip system, or the circuit, and the processing unit 1020 may be a processor, a processing circuit, a logic circuit, or the like.

In addition, the transceiver unit 1010 may alternatively be a transceiver circuit (for example, the transceiver circuit may include a receiving circuit and a sending circuit), and the processing unit may be a processing circuit.

In an example, FIG. 13 is a block diagram of a sensing apparatus 1100 according to an embodiment of this application. The apparatus 1100 includes a processor 1110, and the processor 1110 is coupled to a memory 1120. Optionally, the apparatus further includes the memory 1120, configured to store a computer program or instructions and/or data. The processor 1110 is configured to execute the computer program or the instructions stored in the memory 1120, or read the data stored in the memory 1120, to perform the methods in the foregoing method embodiments.

Optionally, there are one or more processors 1110.

Optionally, there are one or more memories 1120.

Optionally, the memory 1120 and the processor 1110 are integrated together or separately disposed.

Optionally, as shown in FIG. 13, the apparatus 1100 further includes a transceiver 1130. The transceiver 1130 is configured to receive and/or send a signal. For example, the processor 1110 is configured to control the transceiver 1130 to receive and/or send the signal.

In a solution, the apparatus 1100 is configured to implement the operations performed by the sensing transmit end in the foregoing method embodiments.

For example, the processor 1110 is configured to execute the computer program or the instructions stored in the memory 1120, to implement the related operations performed by the sensing transmit end in the foregoing method embodiments, for example, the method performed by the sensing transmit end in the embodiment shown in FIG. 7 or FIG. 10.

In another solution, the apparatus 1100 is configured to implement the operations performed by the sensing receive end in the foregoing method embodiments.

For example, the processor 1110 is configured to execute the computer program or the instructions stored in the memory 1120, to implement the related operations performed by the sensing receive end in the foregoing method embodiments, for example, the method performed by the sensing receive end in the embodiment shown in FIG. 7 or FIG. 10.

In an implementation process, steps in the foregoing methods may be implemented by using a hardware integrated logic circuit in the processor 1110, or by using instructions in a form of software. The method disclosed with reference to embodiments of this application may be directly performed by a hardware processor, or may be performed by using a combination of hardware in the processor and a software module. The software module may be in a mature storage medium in the art, for example, a random access memory, a flash memory, a read-only memory, a programmable read-only memory, an electrically erasable programmable memory, or a register. The storage medium is in the memory 1120, and the processor 1110 reads information in the memory 1120 and completes the steps of the foregoing methods in combination with hardware of the processor 1110. To avoid repetition, details are not described herein again.

It should be understood that, in embodiments of this application, the processor may be one or more integrated circuits, and is configured to execute a related program, to perform the method embodiments of this application.

The processor (for example, the processor 1110) may include one or more processors and be implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit, or another appropriate combination of hardware, firmware, and/or hardware and software, and is configured to perform various functions described in the present disclosure. The processor may be a general-purpose processor or a dedicated processor. For example, the processor 1110 may be a baseband processor or a central processing unit. The baseband processor may be configured to process a communication protocol and communication data. The central processing unit may be configured to cause the apparatus to execute a software program and process data in the software program. A part of the processor may further include a non-volatile random access memory. For example, the processor may further store information of a device type.

The program in this application represents software in a broad sense. A non-limiting example of the software includes program code, a program, a subprogram, instructions, an instruction set, code, a code segment, a software module, an application, a software application, or the like. The program may be run in a processor and/or a computer. In this way, the apparatus can perform various functions and/or processes described in this application.

The memory (for example, the memory 1120) may store data needed by the processor (for example, the processor 1110) during software execution. The memory may be implemented by using any suitable storage technology. For example, the memory may be any available storage medium that can be accessed by the processor and/or the computer. A non-limiting example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM) and a direct rambus random access memory (direct rambus RAM, DR RAM), a removable medium, an optical disc storage, a magnetic disk storage medium, a magnetic storage device, a flash memory, a register, a state storage, a remote mounted storage, a local or remote storage component, or any other medium that can carry or store software, data, or information and accessible by the processor/computer. It should be noted that the memory described in this specification aims to include but is not limited to these memories and any memory of another appropriate type.

The memory (for example, the memory 1120) and the processor (for example, the processor 1110) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (where for example, the integrated circuit may be disposed in UE, a BS, or another network node).

In an example, FIG. 14 is a block diagram of a chip system 1200 according to an embodiment of this application. The chip system 1200 (which may also be referred to as a processing system or a chip) includes a logic circuit 1210 and an input/output interface (input/output interface) 1220.

The logic circuit 1210 may be a processing circuit in the chip system 1200. The logic circuit 1210 may be coupled to and connected to a storage unit, and invoke instructions in the storage unit, so that the chip system 1200 can implement the methods and functions in embodiments of this application. The input/output interface 1220 may be an input/output circuit in the chip system 1200, and outputs information processed by the chip system 1200, or inputs to-be-processed data or signaling information to the chip system 1200 for processing.

In a solution, the chip system 1200 is configured to implement the operations performed by the sensing transmit end in the method embodiments.

For example, the logic circuit 1210 is configured to implement processing-related operations performed by the sensing transmit end in the foregoing method embodiments (for example, the embodiment shown in FIG. 7 or FIG. 10), and the input/output interface 1220 is configured to implement sending and/or receiving-related operations performed by the sensing transmit end in the foregoing method embodiments (for example, the embodiment shown in FIG. 7 or FIG. 10).

In another solution, the chip system 1200 is configured to implement the operations performed by the sensing receive end in the method embodiments.

For example, the logic circuit 1210 is configured to implement processing-related operations performed by the sensing receive end in the foregoing method embodiments (for example, the embodiment shown in FIG. 7 or FIG. 10), and the input/output interface 1220 is configured to implement sending and/or receiving-related operations performed by the sensing receive end in the foregoing method embodiments (for example, the embodiment shown in FIG. 7 or FIG. 10).

An embodiment of this application further provides a computer-readable storage medium, storing computer instructions used to implement the method performed by the sensing transmit end or the sensing receive end in the foregoing method embodiments.

An embodiment of this application further provides a computer program product, including instructions. When the instructions are executed by a computer, the method performed by the sensing transmit end or the sensing receive end in the foregoing method embodiments is implemented.

An embodiment of this application further provides a communication system, including the sensing transmit end and the sensing receive end in the foregoing method embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the foregoing apparatus embodiments are merely examples. For example, division into the foregoing units is only logical function division, and may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps can be implemented by electronic hardware or a combination of computer software and electronic hardware. Whether functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the functions, all or a part of the functions may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sensing method, comprising:

   determining phase modulation and control information of a first sensing signal, wherein the phase modulation and control information is used to control a phase of the first sensing signal to continuously vary over time; and
   sending the first sensing signal to a sensing target.

2. The method according to claim 1, wherein the determining the phase modulation and control information of the first sensing signal comprises:
   determining the phase modulation and control information based on a time-frequency resource occupied by the first sensing signal.

3. The method according to claim 1 or 2, wherein a function obtained by taking a first derivative of the phase of the first sensing signal with respect to time is discontinuous over time.

4. The method according to any one of claims 1 to 3, wherein the first sensing signal and a communication signal occupy a same physical resource block.

5. The method according to any one of claims 1 to 4, wherein a waveform expression of the first sensing signal is:

$$s_l(t) = s_{0,l}(t) \cdot e^{j \cdot \varphi(l,t)},$$

and $t \in [0, T]$, wherein
$s_l(t)$ is the waveform expression of the first sensing signal sent at a $t^{th}$ moment in an $l^{th}$ time period, $s_{0,l}(t)$ is a waveform expression of an original signal of the first sensing signal sent at the $t^{th}$ moment in the $l^{th}$ time period, $\varphi(l, t)$ is the phase modulation and control information loaded on the first sensing signal sent at the $t^{th}$ moment in the $l^{th}$ time period, and $T$ is a length of the time period.

6. The method according to any one of claims 1 to 5, wherein an expression of the phase modulation and control information is:

$$\varphi(l, t) = \theta(s_l(t)) - \theta(s_{0,l}(t)),$$

and $t \in [0, T]$, wherein
$\varphi(l, t)$ is the expression of the phase modulation and control information loaded on the first sensing signal sent at the $t^{th}$ moment in the $l^{th}$ time period, $\theta(s_l(t))$ is the phase of the first sensing signal sent at the $t^{th}$ moment in the $l^{th}$ time period, $\theta(s_{0,l}(t))$ is a phase of the original signal of the first sensing signal sent at the $t^{th}$ moment in the $l^{th}$ time period, and $\theta(s_l(t))$ satisfies:

$$\lim_{t \to t_0} \theta(s_l(t)) = \theta(s_l(t_0))),$$

and $\theta(s_{l-1}(T)) = \theta(s_l(0))$.

7. The method according to any one of claims 1 to 6, wherein a waveform expression of the first sensing signal is:

$$s_{k(l),l}(t) = a_{k,l} \cdot e^{j \cdot \varphi(k(l),l,t)} \cdot e^{j(2\pi \cdot \Delta f \cdot k(l) \cdot (t - N_{CP,l} \cdot T_s)},$$

and $t \in [0, (N + N_{CP,l-1})T_s]$, wherein
$s_{k(l),l}(t)$ is the waveform expression of the first sensing signal sent on a $[k(l)]^{th}$ subcarrier at a $t^{th}$ moment in an $l^{th}$ symbol, $k(l)$ is an index of a subcarrier in the $l^{th}$ symbol, $a_{k(l),l}$ is a loaded modulation signal, $\varphi(k(l), l, t)$ is the phase modulation and control information loaded on the first sensing signal sent on the $[k(l)]^{th}$ subcarrier at the $t^{th}$ moment in the $l^{th}$ symbol, $\Delta f$ is a subcarrier spacing used to send the first sensing signal, $N_{CP,l}$ is a quantity of sampling points of a cyclic prefix corresponding to the $l^{th}$ symbol, and $T_s$ is a sampling time interval.

8. The method according to any one of claims 1 to 6, wherein the waveform expression of the first sensing signal is:

$$s_l(t) = A \cdot \text{rect}\left(\frac{t - lT + T/2}{T}\right) \cdot e^{j(2\pi f_c(l)t + \varphi(l,t))},$$

and $t \in [(l - 1)T, lT]$, wherein
$s_l(t)$ is the waveform expression of the first sensing signal sent at the $t^{th}$ moment in the $l^{th}$ time period, A is a signal amplitude, $\text{rect}\left(\frac{t - lT + T/2}{T}\right)$ is a rectangular window, $T$ is duration of the rectangular window, $f_c(l)$ is a carrier frequency corresponding to the $l^{th}$ time period, and $\varphi(l, t)$ is the phase modulation and control information loaded on the first sensing signal sent at the $t^{th}$ moment in the $l^{th}$ time period.

9. The method according to any one of claims 1 to 8, wherein an expression of the phase modulation and control information is:

$$\varphi(k(l), l, 0) = \varphi(k(l-1), l-1, T) + 2\pi\Delta f \cdot k(l-1) \cdot \left(N + N_{CP,l-1}\right)T_s,$$

wherein

$\varphi(k(l), l, 0)$ is the phase modulation and control information loaded on the first sensing signal sent on the $[k(l)]$th subcarrier at a 0th moment in the lth symbol, $\varphi(k(l-1), l-1, T])$ is the phase modulation and control information loaded on the first sensing signal sent on a $[k(l-1)]$th subcarrier at a Tth moment in an $(l-1)$th symbol, $k(l)$ is the index of the subcarrier in the lth symbol, $k(l-1)$ is an index of a subcarrier in the $(l-1)$th symbol, $\Delta f$ is the subcarrier spacing used to send the first sensing signal, $N_{CP,l-1}$ is a quantity of sampling points of a cyclic prefix corresponding to the $(l-1)$th symbol, $N$ is a quantity of sampling points of an orthogonal frequency division multiplexing OFDM communication signal, and $T_s$ is the sampling time interval.

10. The method according to any one of claims 1 to 8, wherein an expression of the phase modulation and control information is:

$$\varphi(l, (l-1)T) = \varphi(l-1, (l-1)T) - 2\pi \cdot t \cdot \left(f_c(l) - f_c(l-1)\right),$$

wherein

$\varphi(l, (l-1)T)$ is the phase modulation and control information loaded on the first sensing signal sent at an $[(l-1)T]$th moment in the lth time period, $\varphi(l-1, (l-1)T)$ is the phase modulation and control information loaded on the first sensing signal sent at the $[(l-1)T]$th moment in an $(l-1)$th time period, $f_c(l)$ and $f_c(l-1)$ are respectively carrier frequencies corresponding to the lth signal period and the $(l-1)$th signal period, and $T$ is the length of the time period.

11. The method according to any one of claims 1 to 10, wherein the method further comprises:
sending, to a sensing receive end, at least one of the phase modulation and control information and the time-frequency resource occupied by the first sensing signal.

12. The method according to any one of claims 1 to 11, wherein the method further comprises:
determining the time-frequency resource occupied by the first sensing signal.

13. The method according to claim 12, wherein the determining the time-frequency resource occupied by the first sensing signal comprises:

determining a minimum spacing between subcarriers for sending the first sensing signal and a bandwidth needed for sending the first sensing signal; and
determining the time-frequency resource based on the minimum spacing and the bandwidth.

14. The method according to claim 12 or 13, wherein determining the time-frequency resource occupied by the first sensing signal comprises:
selecting a pattern of the time-frequency resource from a preset time-frequency pattern.

15. The method according to any one of claims 1 to 14, wherein the method further comprises:
obtaining an unambiguous range and measurement resolution, wherein the unambiguous range and the measurement resolution are used to determine the phase modulation and control information.

16. A sensing method, comprising:

generating a local signal based on phase modulation and control information of a first sensing signal and a time-frequency resource occupied by the first sensing signal, wherein a phase of the local signal continuously varies over time, the first sensing signal is a signal sent by a sensing transmit end to a sensing target, and the phase modulation and control information is used to control a phase of the first sensing signal to continuously vary over time;
receiving a second sensing signal from the sensing target, wherein the second sensing signal is a signal formed by reflection of the first sensing signal from the sensing target; and

performing sensing processing based on the local signal and the second sensing signal.

17. The method according to claim 16, wherein the phase modulation and control information is determined based on the time-frequency resource.

18. The method according to claim 16 or 17, wherein a function obtained by taking a first derivative of the phase of the local signal with respect to time is discontinuous over time.

19. The method according to any one of claims 16 to 18, wherein the first sensing signal and a communication signal occupy a same physical resource block.

20. The method according to any one of claims 16 to 19, wherein a waveform expression of the first sensing signal is:

$$s_l(t) = s_{0,l}(t) \cdot e^{j \cdot \varphi(l,t)},$$

and $t \in [0, T]$, wherein
$s_l(t)$ is the waveform expression of the first sensing signal sent at a $t^{th}$ moment in an $l^{th}$ time period, $s_{0,l}(t)$ is a waveform expression of an original signal of the first sensing signal sent at the $t^{th}$ moment in the $l^{th}$ time period, $\varphi(l, t)$ is the phase modulation and control information loaded on the first sensing signal sent at the $t^{th}$ moment in the $l^{th}$ time period, and $T$ is a length of the time period.

21. The method according to any one of claims 16 to 20, wherein an expression of the phase modulation and control information is:

$$\varphi(l, t) = \theta(s_l(t)) - \theta(s_{0,l}(t)),$$

and $t \in [0, T]$, wherein
$\varphi(l, t)$ is the expression of the phase modulation and control information loaded on the first sensing signal sent at the $t^{th}$ moment in the $l^{th}$ time period, $\theta(s_l(t))$ is the phase of the first sensing signal sent at the $t^{th}$ moment in the $l^{th}$ time period, $\theta(s_{0,l}(t))$ is a phase of the original signal of the first sensing signal sent at the $t^{th}$ moment in the $l^{th}$ time period, and $\theta(s_l(t))$ satisfies:

$$\lim_{t \to t_0} \theta(s_l(t)) = \theta(s_l(t_0))),$$

and $\theta(s_{l-1}(T)) = \theta(s_l(0))$.

22. The method according to any one of claims 16 to 21, wherein a waveform expression of the first sensing signal is:

$$s_{k(l),l}(t) = a_{k,l} \cdot e^{j \cdot \varphi(k(l),l,t)} \cdot e^{j(2\pi \cdot \Delta f \cdot k(l) \cdot (t - N_{CP,l} \cdot T_s))},$$

and $t \in [0, (N + N_{CP,l-1})T_s]$, wherein
$s_{k(l),l}(t)$ is the waveform expression of the first sensing signal sent on a $[k(l)]^{th}$ subcarrier at a $t^{th}$ moment in an $l^{th}$ symbol, $k(l)$ is an index of a subcarrier in the $l^{th}$ symbol, $a_{k(l),l}$ is a loaded modulation signal, $\varphi(k(l), l, t)$ is the phase modulation and control information loaded on the first sensing signal sent on the $[k(l)]^{th}$ subcarrier at the $t^{th}$ moment in the $l^{th}$ symbol, $\Delta f$ is a subcarrier spacing used to send the first sensing signal, $N_{CP,l}$ is a quantity of sampling points of a cyclic prefix corresponding to the $l^{th}$ symbol, and $T_s$ is a sampling time interval.

23. The method according to any one of claims 16 to 21, wherein the waveform expression of the first sensing signal is:

$$s_l(t) = A \cdot \mathrm{rect}\left(\frac{t - lT + T/2}{T}\right) \cdot e^{j(2\pi f_c(l)t + \varphi(l,t))},$$

and $t \in [(l - 1)T, lT]$, wherein
$s_l(t)$ is the waveform expression of the first sensing signal sent at the $t^{th}$ moment in the $l^{th}$ time period, A is a signal

amplitude, $\mathrm{rect}\left(\frac{t-lT+T/2}{T}\right)$ is a rectangular window, $T$ is duration of the rectangular window, $f_c(l)$ is a carrier frequency corresponding to the $l^{th}$ time period, and $\varphi(l, t)$ is the phase modulation and control information loaded on the first sensing signal sent at the $t^{th}$ moment in the $l^{th}$ time period.

24. The method according to any one of claims 16 to 23, wherein an expression of the phase modulation and control information is:

$$\varphi(k(l), l, 0) = \varphi(k(l - 1), l - 1, T) + 2\pi\Delta f \cdot k(l - 1) \cdot \left(N + N_{CP,l-1}\right)T_s,$$

wherein
$\varphi(k(l),\ l,\ 0)$ is the phase modulation and control information loaded on the first sensing signal sent on the $[k(l)]^{th}$ subcarrier at a $0^{th}$ moment in the $l^{th}$ symbol, $\varphi(k(l\text{-}1), l\text{-}1, T])$ is the phase modulation and control information loaded on the first sensing signal sent on a $[k(l\text{-}1)]^{th}$ subcarrier at a $T^{th}$ moment in an $(l\text{-}1)^{th}$ symbol, $k(l)$ is the index of the subcarrier in the $l^{th}$ symbol, $k(l\text{-}1)$ is an index of a subcarrier in the $(l\text{-}1)^{th}$ symbol, $\Delta f$ is the subcarrier spacing used to send the first sensing signal, $N_{CPl\text{-}1}$ is a quantity of sampling points of a cyclic prefix corresponding to the $(l\text{-}1)^{th}$ symbol, $N$ is a quantity of sampling points of an orthogonal frequency division multiplexing OFDM communication signal, and $T_s$ is the sampling time interval.

25. The method according to any one of claims 16 to 23, wherein an expression of the phase modulation and control information is:

$$\varphi(l, (l - 1)T) = \varphi(l - 1, (l - 1)T) - 2\pi \cdot t \cdot \left(f_c(l) - f_c(l - 1)\right),$$

wherein
$\varphi(l,\ (l\text{-}1)T)$ is the phase modulation and control information loaded on the first sensing signal sent at an $[(l\text{-}1)T]^{th}$ moment in the $l^{th}$ time period, $\varphi(l\text{-}1, (l\text{-}1)T)$ is the phase modulation and control information loaded on the first sensing signal sent at the $[(l\text{-}1)T]^{th}$ moment in an $(l\text{-}1)^{th}$ time period, $f_c(l)$ and $f_c(l\text{-}1)$ are respectively carrier frequencies corresponding to the $l^{th}$ signal period and the $(l\text{-}1)^{th}$ signal period, and $T$ is the length of the time period.

26. The method according to any one of claims 16 to 25, wherein the method further comprises:
receiving at least one of the phase modulation and control information and the time-frequency resource from the sensing transmit end.

27. A sensing apparatus, comprising:

a processing unit, configured to determine phase modulation and control information of a first sensing signal, wherein the phase modulation and control information is used to control a phase of the first sensing signal to continuously vary over time; and
a transceiver unit, configured to send the first sensing signal to a sensing target.

28. The apparatus according to claim 27, wherein the processing unit is specifically configured to:
determine the phase modulation and control information based on a time-frequency resource occupied by the first sensing signal.

29. The apparatus according to claim 27 or 28, wherein a function obtained by taking a first derivative of the phase of the first sensing signal with respect to time is discontinuous over time.

30. The apparatus according to any one of claims 27 to 29, wherein the first sensing signal and a communication signal occupy a same physical resource block.

31. The apparatus according to any one of claims 27 to 30, wherein a waveform expression of the first sensing signal is:

$$s_l(t) = s_{0,l}(t) \cdot e^{j \cdot \varphi(l,t)},$$

and $t \in [0,\ T]$, wherein

$s_l(t)$ is the waveform expression of the first sensing signal sent at a $t^{th}$ moment in an $l^{th}$ time period, $s_{0,l}(t)$ is a waveform expression of an original signal of the first sensing signal sent at the $t^{th}$ moment in the $l^{th}$ time period, $\varphi(l, t)$ is the phase modulation and control information loaded on the first sensing signal sent at the $t^{th}$ moment in the $l^{th}$ time period, and $T$ is a length of the time period.

32. The apparatus according to any one of claims 27 to 31, wherein an expression of the phase modulation and control information is:

$$\varphi(l,t) = \theta(s_l(t)) - \theta(s_{0,l}(t)),$$

and t $\in$ [0, $T$], wherein

$\varphi(l, t)$ is the expression of the phase modulation and control information loaded on the first sensing signal sent at the $t^{th}$ moment in the $l^{th}$ time period, $\theta(s_l(t))$ is the phase of the first sensing signal sent at the $t^{th}$ moment in the $l^{th}$ time period, $\theta(s_{0,l}(t))$ is a phase of the original signal of the first sensing signal sent at the $t^{th}$ moment in the $l^{th}$ time period, and $\theta(s_l(t))$ satisfies:

$$\lim_{t \to t_0}\theta(s_l(t)) = \theta(s_l(t_0))),$$

and $\theta(s_{l-1}(T)) = \theta(s_l(0))$.

33. The apparatus according to any one of claims 27 to 32, wherein a waveform expression of the first sensing signal is:

$$s_{k(l),l}(t) = a_{k,l} \cdot e^{j \cdot \varphi(k(l),l,t)} \cdot e^{j(2\pi \cdot \Delta f \cdot k(l) \cdot (t - N_{CP,l} \cdot T_s)},$$

and $t \in [0, (N + N_{CP,l-1})T_s]$, wherein

$s_{k(l),l}(t)$ is the waveform expression of the first sensing signal sent on a $[k(l)]^{th}$ subcarrier at a $t^{th}$ moment in an $l^{th}$ symbol, $k(l)$ is an index of a subcarrier in the $l^{th}$ symbol, $a_{k(l),l}$ is a loaded modulation signal, $\varphi(k(l), l, t)$ is the phase modulation and control information loaded on the first sensing signal sent on the $[k(l)]^{th}$ subcarrier at the $t^{th}$ moment in the $l^{th}$ symbol, $\Delta f$ is a subcarrier spacing used to send the first sensing signal, $N_{CP,l}$ is a quantity of sampling points of a cyclic prefix corresponding to the $l^{th}$ symbol, and $T_s$ is a sampling time interval.

34. The apparatus according to any one of claims 27 to 32, wherein the waveform expression of the first sensing signal is:

$$s_l(t) = A \cdot \text{rect}\left(\frac{t - lT + T/2}{T}\right) \cdot e^{j(2\pi f_c(l)t + \varphi(l,t))},$$

and $t \in [(l - 1)T, lT]$, wherein

$s_l(t)$ is the waveform expression of the first sensing signal sent at the $t^{th}$ moment in the $l^{th}$ time period, A is a signal amplitude, $\text{rect}\left(\frac{t - lT + T/2}{T}\right)$ is a rectangular window, $T$ is duration of the rectangular window, $f_c(l)$ is a carrier frequency corresponding to the $l^{th}$ time period, and $\varphi(l, t)$ is the phase modulation and control information loaded on the first sensing signal sent at the $t^{th}$ moment in the $l^{th}$ time period.

35. The apparatus according to any one of claims 27 to 34, wherein an expression of the phase modulation and control information is:

$$\varphi(k(l),l,0) = \varphi(k(l-1),l-1,T) + 2\pi\Delta f \cdot k(l-1) \cdot \left(N + N_{CP,l-1}\right)T_s,$$

wherein

$\varphi(k(l), l, 0)$ is the phase modulation and control information loaded on the first sensing signal sent on the $[k(l)]^{th}$ subcarrier at a $0^{th}$ moment in the $l^{th}$ symbol, $\varphi(k(l-1), l-1, T])$ is the phase modulation and control information loaded on the first sensing signal sent on a $[k(l-1)]^{th}$ subcarrier at a $T^{th}$ moment in an $(l-1)^{th}$ symbol, $k(l)$ is the index of the subcarrier in the $l^{th}$ symbol, $k(l-1)$ is an index of a subcarrier in the $(l-1)^{th}$ symbol, $\Delta f$ is the subcarrier spacing used to send the first sensing signal, $N_{CP,l-1}$ is a quantity of sampling points of a cyclic prefix corresponding to the $(l-1)^{th}$ symbol, $N$ is a quantity of sampling points of an orthogonal frequency division multiplexing OFDM communication

signal, and $T_s$ is the sampling time interval.

36. The apparatus according to any one of claims 27 to 34, wherein an expression of the phase modulation and control information is:

$$\varphi(l, (l-1)T) = \varphi(l-1, (l-1)T) - 2\pi \cdot t \cdot \left(f_c(l) - f_c(l-1)\right),$$

wherein

$\varphi(l, (l-1)T)$ is the phase modulation and control information loaded on the first sensing signal sent at an $[(l-1)T]^{th}$ moment in the $l^{th}$ time period, $\varphi(l-1, (l-1)T)$ is the phase modulation and control information loaded on the first sensing signal sent at the $[(l-1)T]^{th}$ moment in an $(l-1)^{th}$ time period, $f_c(l)$ and $f_c(l-1)$ are respectively carrier frequencies corresponding to the $l^{th}$ signal period and the $(l-1)^{th}$ signal period, and $T$ is the length of the time period.

37. The apparatus according to any one of claims 27 to 36, wherein the transceiver unit is further configured to: send, to a sensing receive end, at least one of the phase modulation and control information and the time-frequency resource occupied by the first sensing signal.

38. The apparatus according to any one of claims 27 to 37, wherein the processing unit is further configured to: determine the time-frequency resource occupied by the first sensing signal.

39. The apparatus according to claim 38, wherein the processing unit is specifically configured to:

   determine a minimum spacing between subcarriers for sending the first sensing signal and a bandwidth needed for sending the first sensing signal; and
   determine the time-frequency resource based on the minimum spacing and the bandwidth.

40. The apparatus according to claim 38 or 39, wherein the processing unit is specifically configured to: select a pattern of the time-frequency resource from a preset time-frequency pattern.

41. The apparatus according to any one of claims 27 to 40, wherein the transceiver unit is further configured to: obtain an unambiguous range and measurement resolution, wherein the unambiguous range and the measurement resolution are used to determine the phase modulation and control information.

42. A sensing apparatus, comprising:

   a processing unit, configured to generate a local signal based on phase modulation and control information of a first sensing signal and a time-frequency resource occupied by the first sensing signal, wherein a phase of the local signal continuously varies over time, the first sensing signal is a signal sent by a sensing transmit end to a sensing target, and the phase modulation and control information is used to control a phase of the first sensing signal to continuously vary over time; and
   a transceiver unit, configured to receive a second sensing signal from the sensing target, wherein the second sensing signal is a signal formed by reflection of the first sensing signal from the sensing target, wherein the processing unit is further configured to perform sensing processing based on the local signal and the second sensing signal.

43. The apparatus according to claim 42, wherein the phase modulation and control information is determined based on the time-frequency resource.

44. The apparatus according to claim 42 or 43, wherein a function obtained by taking a first derivative of the phase of the local signal with respect to time is discontinuous over time.

45. The apparatus according to any one of claims 42 to 44, wherein the first sensing signal and a communication signal occupy a same physical resource block.

46. The apparatus according to any one of claims 42 to 45, wherein a waveform expression of the first sensing signal is:

$$s_l(t) = s_{0,l}(t) \cdot e^{j \cdot \varphi(l,t)},$$

and $t \in [0, T]$, wherein

$s_l(t)$ is the waveform expression of the first sensing signal sent at a $t^{th}$ moment in an $l^{th}$ time period, $s_{0,l}(t)$ is a waveform expression of an original signal of the first sensing signal sent at the $t^{th}$ moment in the $l^{th}$ time period, $\varphi(l, t)$ is the phase modulation and control information loaded on the first sensing signal sent at the $t^{th}$ moment in the $l^{th}$ time period, and $T$ is a length of the time period.

47. The apparatus according to any one of claims 42 to 46, wherein an expression of the phase modulation and control information is:

$$\varphi(l,t) = \theta(s_l(t)) - \theta(s_{0,l}(t)),$$

and $t \in [0, T]$, wherein

$\varphi(l, t)$ is the expression of the phase modulation and control information loaded on the first sensing signal sent at the $t^{th}$ moment in the $l^{th}$ time period, $\theta(s_l(t))$ is the phase of the first sensing signal sent at the $t^{th}$ moment in the $l^{th}$ time period, $\theta(s_{0,l}(t))$ is a phase of the original signal of the first sensing signal sent at the $t^{th}$ moment in the $l^{th}$ time period, and $\theta(s_l(t))$ satisfies:

$$\lim_{t \to t_0} \theta(s_l(t)) = \theta(s_l(t_0))),$$

and $\theta(s_{l-1}(T)) = \theta(s_l(0))$.

48. The apparatus according to any one of claims 42 to 47, wherein a waveform expression of the first sensing signal is:

$$s_{k(l),l}(t) = a_{k,l} \cdot e^{j \cdot \varphi(k(l),l,t)} \cdot e^{j(2\pi \cdot \Delta f \cdot k(l) \cdot (t - N_{CP,l} \cdot T_s))},$$

and $t \in [0, (N + N_{CP,l-1})T_s]$, wherein

$s_{k(l),l}(t)$ is the waveform expression of the first sensing signal sent on a $[k(l)]^{th}$ subcarrier at a $t^{th}$ moment in an $l^{th}$ symbol, $k(l)$ is an index of a subcarrier in the $l^{th}$ symbol, $a_{k(l),l}$ is a loaded modulation signal, $\varphi(k(l), l, t)$ is the phase modulation and control information loaded on the first sensing signal sent on the $[k(l)]^{th}$ subcarrier at the $t^{th}$ moment in the $l^{th}$ symbol, $\Delta f$ is a subcarrier spacing used to send the first sensing signal, $N_{CP,l}$ is a quantity of sampling points of a cyclic prefix corresponding to the $l^{th}$ symbol, and $T_s$ is a sampling time interval.

49. The apparatus according to any one of claims 42 to 47, wherein the waveform expression of the first sensing signal is:

$$s_l(t) = A \cdot \text{rect}\left(\frac{t - lT + T/2}{T}\right) \cdot e^{j(2\pi f_c(l)t + \varphi(l,t))},$$

and $t \in [(l - 1)T, lT]$, wherein

$s_l(t)$ is the waveform expression of the first sensing signal sent at the $t^{th}$ moment in the $l^{th}$ time period, A is a signal amplitude, $\text{rect}\left(\frac{t - lT + T/2}{T}\right)$ is a rectangular window, $T$ is duration of the rectangular window, $f_c(l)$ is a carrier frequency corresponding to the $l^{th}$ time period, and $\varphi(l, t)$ is the phase modulation and control information loaded on the first sensing signal sent at the $t^{th}$ moment in the $l^{th}$ time period.

50. The apparatus according to any one of claims 42 to 49, wherein an expression of the phase modulation and control information is:

$$\varphi(k(l), l, 0) = \varphi(k(l-1), l-1, T) + 2\pi\Delta f \cdot k(l-1) \cdot \left(N + N_{CP,l-1}\right)T_s,$$

wherein

$\varphi(k(l), l, 0)$ is the phase modulation and control information loaded on the first sensing signal sent on the $[k(l)]^{th}$ subcarrier at a $0^{th}$ moment in the $l^{th}$ symbol, $\varphi(k(l-1), l-1, T)$ is the phase modulation and control information loaded on the first sensing signal sent on a $[k(l-1)]^{th}$ subcarrier at a $T^{th}$ moment in an $(l-1)^{th}$ symbol, $k(l)$ is the index of the subcarrier in the $l^{th}$ symbol, $k(l-1)$ is an index of a subcarrier in the $(l-1)^{th}$ symbol, $\Delta f$ is the subcarrier spacing used to send the first sensing signal, $N_{CP,l-1}$ is a quantity of sampling points of a cyclic prefix corresponding to the $(l-1)^{th}$ symbol, $N$ is a quantity of sampling points of an orthogonal frequency division multiplexing OFDM communication signal, and $T_s$ is the sampling time interval.

51. The apparatus according to any one of claims 42 to 49, wherein an expression of the phase modulation and control information is:

$$\varphi(l, (l-1)T) = \varphi(l-1, (l-1)T) - 2\pi \cdot t \cdot \big(f_c(l) - f_c(l-1)\big),$$

wherein
$\varphi(l, (l-1)T)$ is the phase modulation and control information loaded on the first sensing signal sent at an $[(l-1)T]^{th}$ moment in the $l^{th}$ time period, $\varphi(l-1, (l-1)T)$ is the phase modulation and control information loaded on the first sensing signal sent at the $[(l-1)T]^{th}$ moment in an $(l-1)^{th}$ time period, $f_c(l)$ and $f_c(l-1)$ are respectively carrier frequencies corresponding to the $l^{th}$ signal period and the $(l-1)^{th}$ signal period, and $T$ is the length of the time period.

52. The apparatus according to any one of claims 42 to 51, wherein the transceiver unit is further configured to: receive at least one of the phase modulation and control information and the time-frequency resource from the sensing transmit end.

53. A sensing apparatus, comprising at least one processor and a communication interface, wherein the communication interface is configured to input and/or output a signal, and the at least one processor is configured to execute a computer program stored in a memory, to cause the apparatus to implement the method according to any one of claims 1 to 15, or implement the method according to any one of claims 16 to 26.

54. A computer-readable medium, comprising a computer program, wherein when the computer program is run on a computer, the computer is caused to perform the method according to any one of claims 1 to 15, or perform the method according to any one of claims 16 to 26.

55. A chip, comprising a processor and an interface, wherein the processor is configured to invoke, from a memory, a program stored in the memory and run the program, to perform the method according to any one of claims 1 to 15, or perform the method according to any one of claims 16 to 26.

56. A computer program product, wherein the computer program product comprises a computer program, and when the computer program is run a computer, the computer is caused to perform the method according to any one of claims 1 to 15, or perform the method according to any one of claims 16 to 26.

57. A sensing system, comprising the apparatus according to any one of claims 27 to 41 and the apparatus according to any one of claims 42 to 52.

101

Sensing node

Passive target

(a)

102

Sensing node

Active target

(b)

FIG. 1

Normalized amplitude

1

$\dfrac{1}{\sqrt{2}}$

$\rho_0$

Time

FIG. 2

Power

$P_m$

$P_s$

Region #1

Region #2

Time

FIG. 3

FIG. 4

FIG. 5

(a)

(b)

FIG. 6

200

```
┌─────────────────┐      ┌──────────┐              ┌──────────┐
│    Sensing      │      │ Sensing  │              │ Sensing  │
│  transmit end   │      │  target  │              │receive end│
└────────┬────────┘      └────┬─────┘              └────┬─────┘
         │                    │                         │
┌────────┴──────────────┐     │                         │
│S210: Determine phase  │     │              ┌ ─ ─ ─ ─ ─┴─ ─ ─ ─ ─ ─ ┐
│modulation and control │     │                                       
│information of a first │     │              │S250: Generate a local signal│
│    sensing signal     │     │                                       
└────────┬──────────────┘     │              └ ─ ─ ─ ─ ─┬─ ─ ─ ─ ─ ─ ┘
         │                    │                         │
         │── S220: First sensing signal ──▶│            │
         │                    │                         │
         │                    │── S230: Second sensing signal ──▶│
         │                    │                         │
         │                    │          ┌──────────────┴──────────────┐
         │                    │          │S240: Perform sensing        │
         │                    │          │processing based on the local│
         │                    │          │signal and the second sensing│
         │                    │          │signal, to obtain a sensing  │
         │                    │          │result                       │
         │                    │          └──────────────┬──────────────┘
         │                    │                         │
```

## FIG. 7

Phase

SFCW
SFCPW
FMCW

Time

## FIG. 8

$f$ (a)

11
10
9
8
7
6
5
4
3
2
1
0
    0 1 2 3 4 5 6 7 8 9 10 11 12 13  $t$

$f$ (b)

11
10
9
8
7
6
5
4
3
2
1
0
    0 1 2 3 4 5 6 7 8 9 10 11 12 13  $t$

## FIG. 9

300

| Control node | Transmitting node | Sensing target | Receiving node |

S301: Sensing trigger signal

S302: Enable a sensing function

S303: Ranging accuracy and unambiguous range

S304: Determine a subcarrier pattern of a sensing signal #1 based on the ranging accuracy and the unambiguous range

S305: Determine phase modulation and control term of the sensing signal #1

S306: Subcarrier pattern and phase modulation and control information of the sensing signal #1

S307: Generate a local signal

S308: Sensing signal #1

S309: Sensing signal #2

S310: Perform sensing processing on the sensing signal #2 based on the local signal, to obtain a sensing result

FIG. 10

FIG. 11

1000

Transceiver unit 1010

Processing unit 1020

FIG. 12

1100

Processor 1110

Transceiver 1130

Memory 1120

FIG. 13

Chip system 1200

Logic circuit
1210

Input/Output interface
1220

FIG. 14

## INTERNATIONAL SEARCH REPORT

| International application No. |
| --- |
| **PCT/CN2023/094818** |

**A.    CLASSIFICATION OF SUBJECT MATTER**

H04W72/0446(2023.01)i

According to International Patent Classification (IPC) or to both national classification and IPC

**B.    FIELDS SEARCHED**

Minimum documentation searched (classification system followed by classification symbols)

IPC:H04W; H04B

Documentation searched other than minimum documentation to the extent that such documents are included in the fields searched

Electronic data base consulted during the international search (name of data base and, where practicable, search terms used)

CNTXT, ENTXTC, ENTXT, DWPI, CJFD, 3GPP: 感知信号, 相位, 相移, 移相, 调控, 时间, 连续, 时频, 表达式, sensing signal, phase, adjust, regulation, time, continuous, frequency, expression

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 109451430 A (HUAWEI TECHNOLOGIES CO., LTD.) 08 March 2019 (2019-03-08) description, paragraphs 74-162 | 1-57 |
| Y | CN 104079517 A (HARBIN ENGINEERING UNIVERSITY) 01 October 2014 (2014-10-01) description, paragraphs 2 and 84 | 1-57 |
| A | CN 115802399 A (HUAWEI TECHNOLOGIES CO., LTD.) 14 March 2023 (2023-03-14) entire document | 1-57 |
| A | CN 115442756 A (VIVO COMMUNICATION TECHNOLOGY CO., LTD.) 06 December 2022 (2022-12-06) entire document | 1-57 |
| A | US 2019219688 A1 (HUAWEI TECHNOLOGIES CO., LTD.) 18 July 2019 (2019-07-18) entire document | 1-57 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 December 2023** | **20 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094818**

| Patent document cited in search report | | | Publication date (day/month/year) | Patent family member(s) | | | Publication date (day/month/year) |
|---|---|---|---|---|---|---|---|
| CN | 109451430 | A | 08 March 2019 | None | | | |
| CN | 104079517 | A | 01 October 2014 | None | | | |
| CN | 115802399 | A | 14 March 2023 | WO | 2023036123 | A1 | 16 March 2023 |
| CN | 115442756 | A | 06 December 2022 | WO | 2022253238 | A1 | 08 December 2022 |
| US | 2019219688 | A1 | 18 July 2019 | WO | 2018058374 | A1 | 05 April 2018 |
| | | | | EP | 3503490 | A1 | 26 June 2019 |
| | | | | CN | 109565497 | A | 02 April 2019 |

Form PCT/ISA/210 (patent family annex) (July 2022)